(19) Europäisches Patentamt
European Patent Office
Office européen des brevets

(11) **EP 2 567 524 B1**

(12) **EUROPEAN PATENT SPECIFICATION**

(45) Date of publication and mention
of the grant of the patent:
**26.06.2019 Bulletin 2019/26**

(21) Application number: **10717004.5**

(22) Date of filing: **03.05.2010**

(51) Int Cl.:
**H04L 29/06** *(2006.01)*

(86) International application number:
**PCT/US2010/033367**

(87) International publication number:
**WO 2011/139266 (10.11.2011 Gazette 2011/45)**

(54) **PROTOCOL OVERHEAD REDUCTION**

PROTOKOLLOVERHEAD REDUZIERUNG

RÉDUCTION D'OVERHEAD DE PROTOCOLE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**13.03.2013 Bulletin 2013/11**

(73) Proprietor: **Nokia Technologies Oy
02610 Espoo (FI)**

(72) Inventors:
• **BOUAZIZI, Imed
FI-33720 Tampere (FI)**

• **KONDRAD, Lukasz
FI-33720 Tampere (FI)**

(74) Representative: **Sayer, Robert David et al
Venner Shipley LLP
200 Aldersgate
London EC1A 4HD (GB)**

(56) References cited:
**EP-A1- 2 134 059          WO-A2-2005/015881
US-A1- 2002 141 365**

**Description**

**BACKGROUND INFORMATION**

Digital broadband broadcast networks enable end users to receive digital content including video, audio, data, and so forth. Using a mobile terminal, a user may receive digital content over a wireless digital broadcast network. Digital content can be transmitted in a cell within a network, where a cell may represent a geographical area covered by a transmitter in a communication network. A network may have multiple cells and cells may be adjacent to other cells.

A mobile terminal may receive a program or service in a transport stream (TS). The TS may carry individual elements of the program or service such as the audio, video and data components of a program or service. Typically, the mobile terminal may locate the different components of a particular program or service through Program Specific Information (PSI) or Service Information (SI) embedded in the TS.

EP2134059 discloses a content distributing system. US2002/141365 discloses a method for providing protocol options in a wireless communication system. WO2005/015881 discloses header compression enhancement for broadcast services.

**BRIEF SUMMARY OF THE EXAMPLE EMBODIMENTS**

The invention is set forth in the claims.

The following presents a simplified summary in order to provide a basic understanding of some aspects of example embodiments. The summary is not an extensive overview. It is neither intended to identify key or critical elements nor to delineate scope. The following summary merely presents some concepts in a simplified form as a prelude to the more detailed description below.

Aspects may be directed to apparatuses, methods, and computer readable media that may include receiving a data flow comprising a plurality of packets, identifying static data and dynamic data in packet headers of the plurality of packets, generating protocol packets by removing the static data from the packet headers while retaining the dynamic data, generating signaling data based on the static data, and generating a transport stream comprising the signaling data and the protocol packets.

Also, aspects may be directed to apparatuses, methods, and computer readable media that may include receiving a transport stream that comprises signaling data and a plurality of protocol packets, parsing the signaling data from the transport stream, removing a protocol header from each protocol packet to extract dynamic data, determining static data based on the signaling data, and reconstructing packets based on the static data and the dynamic data.

**BRIEF DESCRIPTION OF THE DRAWINGS**

A more complete understanding of the example embodiments and the advantages thereof may be acquired by referring to the following description in consideration of the accompanying drawings, in which like reference numbers indicate like features, and wherein:

FIG. 1 illustrates a digital broadband broadcast system in which one or more example embodiments may be implemented.

FIG. 2 illustrates an example mobile device.

FIG. 3 illustrates an example of cells, each of which may be covered by a different transmitter.

FIGs. 4A-B illustrate example embodiments of protocol headers.

FIGs. 5A-B depict an IPv4 packet and an example protocol packet generated based on the IPv4 packet.

FIGs. 6A-B depict an IPv6 packet and an example protocol packet generated based on the IPv6 packet.

FIGs. 7A-C depict a UDP packet, an example protocol packet generated based on a original packet having UDP and IPv4 headers, and an example protocol packet generated based on an original packet having UDP and IPv6 headers.

FIGs. 8A-C depict example embodiments of extension headers for an IPv6 packet.

FIGs. 9A-B depict example embodiments of protocol packets generated based on an original packet having IPv4, UDP, and RTP headers and an original packet having IPv6, UDP, and RTP headers.

FIG. 10 illustrates an example method for generating a transport stream.

FIG. 11 illustrates an example flow diagram of a method for performing service discovery to identify a transport stream.

FIG. 12 illustrates an example flow diagram of a method for processing a transport stream generated using the method of FIG. 10.

FIG. 13 illustrates an example flow diagram of a method for compressing data in a dynamic field.

FIG. 14 illustrates an example flow diagram of a method for performing service discovery.

**DETAILED DESCRIPTION OF THE EXAMPLE EMBODIMENTS**

In the following description of the various embodiments, reference is made to the accompanying drawings, which form a part hereof, and in which is shown by way of illustration various embodiments may be practiced. It is to be understood that other embodiments may be utilized and structural and functional modifications may be made without departing from the scope of the present disclosure.

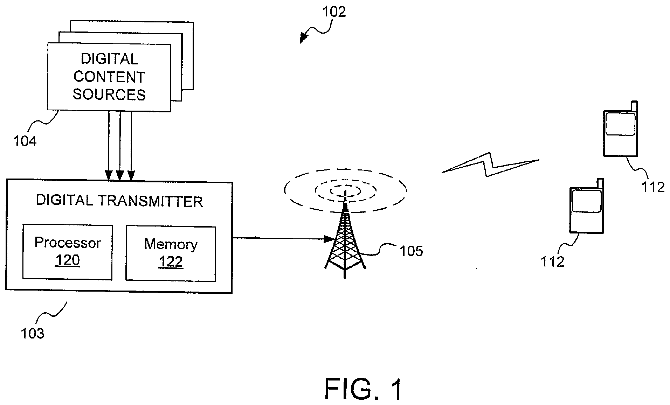

FIG. 1 illustrates a suitable digital broadband broadcast system 102 in which one or more illustrative embodiments may be implemented. Systems such as the one illustrated here may utilize a digital broadband broadcast technology, for example Digital Video Broadcast (DVB) - Handheld (DVB-H) or next generation DVB networks (DVB-NGH). Examples of other digital broadcast standards which digital broadband broadcast system 102 may utilize include Digital Video Broadcast - Terrestrial (DVB-T), second generation digital terrestrial television broadcasting system (DVB-T2), Integrated Services Digital Broadcasting - Terrestrial (ISDB-T), Advanced Television Systems Committee (ATSC) Data Broadcast Standard, Digital Multimedia Broadcast-Terrestrial (DMB-T), Terrestrial Digital Multimedia Broadcasting (T-DMB), Satellite Digital Multimedia Broadcasting (S-DMB), Forward Link Only (FLO), Digital Audio Broadcasting (DAB), and Digital Radio Mondiale (DRM). Other digital broadcasting standards and techniques, now known or later developed, may also be used. Aspects of the example embodiments may also be applicable to other multicarrier digital broadcast systems such as, for example, T-DAB, T/S-DMB, ISDB-T, and ATSC, proprietary systems such as QUALCOMM Media-aFLO /FLO, and non-traditional systems such 3GPP MBMS (Multimedia Broadcast/Multicast Services) and 3GPP2 BCMCS (Broadcast/Multicast Service).

Digital content may be created and/or provided by digital content sources 104 and may include video signals, audio signals, data, metadata, and so forth. Digital content sources 104 may provide content to digital transmitter 103 in the form of digital packets, for example, Internet Protocol (IP) packets. A group of related data packets sharing a certain unique data address (for example, IP address) or other source identifier may be referred to as a data flow. In various embodiments, the data flows may be data streams such as, for example, IP streams.

Digital transmitter 103 may receive, process, and forward for transmission a transport stream that may include multiple data flows from multiple digital content sources 104. The transmitter 103 may include at least one processor 120 and at least one memory 122 or other computer readable media configured to store instructions that, when executed by the processor, are configured to cause the transmitter 103 to perform the operations described herein. The transport stream may then be passed to digital broadcast tower 105 (or other physical transmission component) for wireless transmission. Ultimately, mobile terminals or devices 112, or other types of receivers, may selectively receive and consume digital content originating from digital content sources 104.

Transport streams may deliver compressed audio and video and data to a mobile device 112 via third party delivery networks. Moving Picture Expert Group (MPEG) is a technology by which encoded video, audio, and data within a single program is multiplexed, with other programs, into the transport stream. The transport stream may be a packetized data stream, with fixed length packets, including a header. The individual elements of a program, audio and video, are each carried within packets having an unique packet identification (PID). To enable the mobile device 112 to locate the different elements of a particular program within the transport stream, Program Specific Information (PSI), which is embedded into the transport stream, is supplied. In addition, additional Service Information (SI), a set of tables adhering to the MPEG private section syntax, may be incorporated into the transport stream. This enables the mobile device 112 to correctly process the data contained within the transport stream.

The transport stream may include an Electronic Service Guide (ESG) to provide program or service related information to the mobile device 112. Generally, an Electronic Service Guide (ESG) enables the transmitter 103 to communicate what services are available to end users and how the services may be accessed. The ESG includes independently existing pieces of ESG fragments. Traditionally, ESG fragments include XML and/or binary documents, but more recently they have encompassed a vast array of items, such as for example, a SDP (Session Description Protocol) description, textual file, or an image. The ESG fragments describe one or several aspects of currently available (or future) service or broadcast program. Such aspects may include for example: free text description, schedule, geographical availability, price, purchase method, genre, and supplementary information such as preview images or clips. Audio, video and other types of data including the ESG fragments may be transmitted through a variety of types of networks according to many different protocols. For example, data can be transmitted through a collection of networks usually referred to as the "Internet" using protocols of the Internet protocol suite, such as Internet Protocol (IP) and User Datagram Protocol (UDP). Data is often transmitted through the Internet addressed to a single user. It can, however, be addressed to a group of users, commonly known as multicasting. In the case in which the data is addressed to all users it is called broadcasting.

One way of broadcasting or multicasting data is to use an IP datacasting (IPDC) network. IPDC is a combination of digital broadcast and Internet Protocol. Through such an IP-based broadcasting network, one or more service providers can supply different types of IP services including on-line newspapers, radio, and television. These IP services are organized into one or more data flows in the form of audio, video and/or other types of data. To determine when and where these data flows occur, users refer to an electronic service guide (ESG).

One type of DVB is Digital Video Broadcasting-handheld (DVB-H). The DVB-H is designed to deliver 10 Mbps of data to a battery-powered terminal device. ESG fragments may be transported by IPDC over a network, such as for example, DVB-H to destination devices. The DVB-H may include, for example, separate audio, video and data flows. The mobile device 112 may determine the ordering of the ESG fragments upon receipt and assemble them into useful information.

In DVB systems, data services (for example, IP services) may be carried in the transport stream over Multi-Protocol Encapsulation (MPE) Sections or over Generic Stream Encapsulation (GSE) Protocol. MPE may form an MPE section by encapsulating protocol data units (PDUs, for example, IP data packets). Each MPE section may be sent as a series of transport stream packets in a single transport stream. MPE may support data broadcast services that require transmission of datagrams or communication protocols via DVB compliant broadcast networks.

The GSE protocol may provide network layer packet encapsulation and fragmentation functions over generic streams. GSE may provide efficient encapsulation of IP datagrams over variable length Layer 2 packets, which may then be directly scheduled on the physical layer (for example, base-band frames in DVB-T2). GSE may support encapsulation of multiple protocols (Internet Protocol version 4 (IPv4), Internet Protocol version 6 (IPv6), Moving Picture Experts Group (MPEG), asynchronous transfer mode (ATM), Ethernet, etc.) and permits inclusion of new protocol types. GSE also supports several addressing modes.

IP datagrams may be encapsulated in one or more GSE Packets. The encapsulation process may delineate a start and end of each network-layer PDU, add control information such as the network protocol type and address label, and provide an overall integrity check when needed. Example syntax of a GSE protocol is presented below in Table 1.

Table 1 Generic Stream Encapsulation packet

| Field | Size |
|---|---|
| GSE_Packet() { | |
| Start Indicator | 1 bit |
| End_Indicator | 1 bit |
| Label_Type_Indicator | 2 bits |
| if (Start_Indieator="0") and (End_Indicator="0") and (Labe)_Type_Indicatot=="00") { | |
| Padding_bits | 4 bits |
| for(i=0;i<N1;i++) { | |
| Padding_bytes | 8 bits |
| } | |
| } else { | |
| GSE_Length | 12 bits |
| if (Start_Indicator=="0") or (End_Indicator="0") { | |
| Frag_ID | 8 bits |
| } | |
| if (Start_Indicator="1") and (End_Indicator="0") { | |
| Total_Length | 16 bits |
| } | |
| if (Start_Indicator=" 1") { | |
| Protocol_Type | 16 bits |
| if (Label_Type_Indicator="00") { | |
| 6_Byte_Label | 48 bits |
| } else if (Label_Type_Indicator=="01") { | |
| 3_Byte_Label | 24 bits |

(continued)

| Field | Size |
|---|---|
| } | |
| if (Protocol_Type < 1536) { | |
| for(i=0;i<N2;i++) { | |
| Extension_Header_Byte | 8 bits |
| } | |
| } | |
| } | |
| for(i=0;i<N3;i++) { | |
| PDU_data_byte | 8 bits |
| } | |
| if (Start_Indicator=="0") and ("End_Indicator="1") { | |
| CRC_32 | 32 bits |
| } | |
| } | |
| } | |

In the above table, N1 may be the number of bytes until the end of a Base Band frame and may be set to "0". When used for padding, the Start_Indicator, End_Indicator, and Label_Type_Indicatormay be set to "0"/"00". N2 may be the length in bytes of the extension headers as defined in Internet Engineering Task Force (IETF) Request for Comments (RFC) 4326, "Unidirectional Lightweight Encapsulation (ULE) for Transmission of IP Datagrams over an MPEG-2 Transport Stream," December 2005, the contents of which are hereby incorporated by reference in their entirety. N3 may be the length of an encapsulated PDU or PDU fragments in bytes.

Data broadcast specifications may support a standard mechanism for signaling data services deployed within DVB networks and enable the implementation of DVB mobile devices 112 that are completely self tuning when accessing data flows on one or more transport streams.

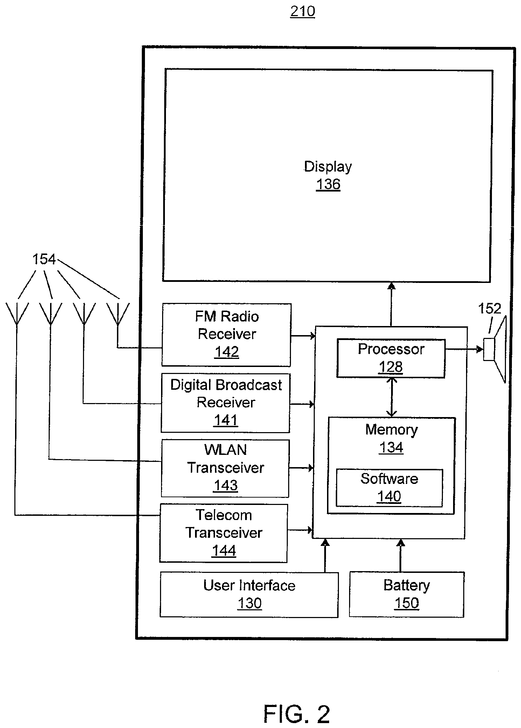

As shown in FIG. 2, apparatus or mobile device 112 may include at least one processor 128 connected to user interface 130, at least one memory 134 and/or other storage, and display 136, which may be used for displaying video content, service guide information, and the like to a mobile-device user. Mobile device 112 may also include battery 150, speaker 152 and antennas 154. User interface 130 may further include a keypad, touch screen, voice interface, one or more arrow keys, joystick, data glove, mouse, roller ball, or the like. In some embodiments, there may be several processors and/or memories in mobile device 112.

Computer executable instructions and data used by processor 128 and other components within mobile device 112 may be stored in a computer readable memory 134. The memory may be implemented with any combination of read only memory modules or random access memory modules, optionally including both volatile and nonvolatile memory. Software 140 may be stored within memory 134 and/or storage to provide instructions to processor 128 for enabling mobile device 112 to perform various functions as described herein. Alternatively, some or all of mobile device 112 computer executable instructions may be embodied in hardware or firmware (not shown).

Mobile device 112 may be configured to receive, decode and process digital broadband broadcast transmissions that are based, for example, on the Digital Video Broadcast (DVB) standard, such as DVB-H (ETSI EN 302 304, V1.1.1 (2004-11)) or DVB-T (ETSI EN 300 744, V1.6.1 (2009-01)) or DVB-T2 (ETSI EN 302 755, V1.1.1 (2009-09)), the contents of all of which are incorporated herein by reference in their entireties, through a specific DVB receiver 141. The mobile device 112 may also be provided with other types of receivers for digital broadband broadcast and/or multicast transmissions. Additionally, mobile device 112 may also be configured to receive, decode and process transmissions through frequency modulated (FM) / amplitude modulated (AM) radio receiver 142, wireless local area network (WLAN) transceiver 143, and telecommunications transceiver 144. In one aspect, mobile device 112 may receive radio data stream (RDS) messages.

Additionally, the digital transmission may be time sliced, such as in DVB-H technology. Time-slicing may reduce the average power consumption of the mobile device 112 and may enable smooth and seamless handover. Time-slicing entails sending data in bursts using a higher instantaneous bit rate as compared to the bit rate required if the data were transmitted using a traditional streaming mechanism. In this case, the mobile device 112 may have one or more buffer memories for storing the decoded time sliced transmission before presentation.

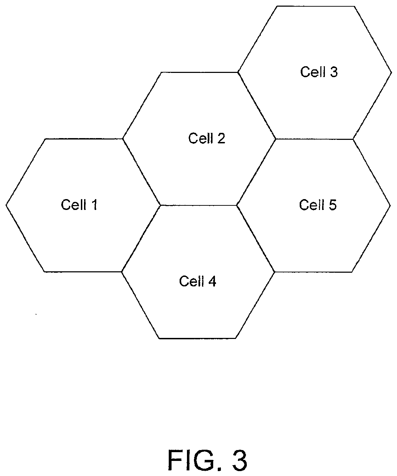

FIG. 3 illustrates an example of cells, each of which may be covered by a different transmitter. In a typical communication system, a cell may define a geographical area that may be covered by a transmitter. The cell may be of any size and may have neighboring cells. In this example, Cell 1 represents a geographical area that is covered by a transmitter for a communication network. Cell 2 is next to Cell 1 and represents a second geographical area that may be covered by a different transmitter. Cell 2 may, for example, be a different cell within the same network as Cell 1. Alternatively, Cell 2 may be in a network different from that of Cell 1. Cells 1, 3, 4, and 5 are neighboring cells of Cell 2, in this example.

Data throughput is a scarce resource and should be utilized in an efficient way. The packet overhead of many currently used protocols (for example, IP, User Datagram Protocol (UDP), and/or Real-time Transport Protocol (RTP)) may be significant and may result in a waste of resources. Often, packet headers of these protocols may include information that is static (for example, does not change) from packet to packet within a data flow. Also, these headers may include information that the mobile device 112 may infer from other data in the packet, without having to actually receive the data. The remaining data in these packets may be referred to as dynamic data, which may include information that changes from packet to packet within the data flow.

Transmitting static and inferable data in packet headers may waste bandwidth. For more efficient bandwidth use, the transmitter 103 may apply an overhead reduction protocol, as described herein, to remove the static and inferable data from packets received from the content sources 104, referred to as "original packets," prior to transmission to the mobile device 112. The transmitter 103 may encapsulate the dynamic data with protocol headers to generate protocol packets. For example, the protocol packets may be layer 2 data packets. A protocol header may include less data than in the header originally included on the packets by omitting the static and inferable data, thereby conserving bandwidth. The example embodiments described herein improve network throughput by minimizing protocol overhead without sacrificing the reliability of the data delivery.

To permit reconstruction of the original packets by the mobile device 112, the transmitter 103 may generate signaling data based on static data removed from the original packets. The signaling data may include the static data and information indicating how to reconstruct headers of the original packets from the protocol packets. The signaling data also may be communicated to the mobile device 112 less frequently than the original packets. The transmitter 103 may communicate the signaling data to the mobile device 112 out-of-band. For example, out-of-band may refer to a previously established communication method or channel. Out-of-band may be a transmission over a logical channel different than the channel over which the protocol packets are transmitted to the mobile device 112, such as, for example, L2 signaling (PSI/SI). The transmitter 103 may then generate a transport stream that includes the signaling data and the protocol packets for transmission to the mobile device 112. During service discovery, the mobile device 112 may parse the signaling data from a received transport stream and use the signaling data and the protocol header to reconstruct the original packets from the protocol packets.

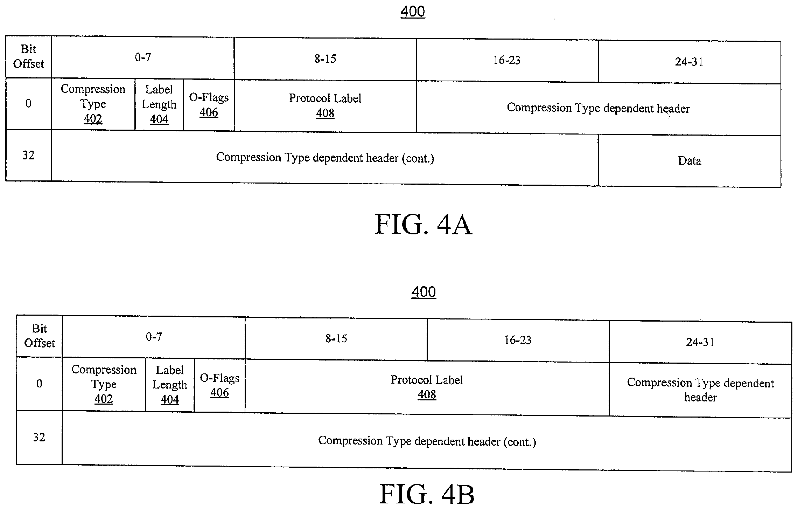

FIGs. 4A-B illustrate example embodiments of protocol headers. In an example, the compression protocol header 400 may have four predetermined fields: Compression Type 402, Label Length 404, O-Flags 406, and Protocol Label 408. The protocol header 400 may also include other header fields that depend on the type of compression applied to the original packet header. Table 2, below, illustrates example values for the Compression Type field 402 that define the type of compression used; however, other values may be used and headers of other protocols may be compressed.

Table 2 Compression Type field

| Value | Type |
|---|---|
| 000 | IPv4 header compression |
| 001 | IPv6 header compression |
| 010 | IPv4 and UDP header compression |
| 011 | IPv6 and UDP header compression |
| 100 | IPv4/UDP/RTP header compression |
| 101 | IPv6/UDP/RTP header compression |
| 110 111 | Reserved for future use |

In an example embodiment, the compression protocol may reduce protocol overhead of original packets having headers generated using one or more protocols. For example, the techniques described herein may be used to reduce protocol overhead for an original packet having an Internet Protocol version 4 (IPv4) header, an original packet having both IPv4 and UDP headers, an original packet having IPv4, UDP, and RTP headers, and so forth.

The Label Length field may be a fixed size (for example, 1 bit) and may indicate a length of the Protocol Label field (for example, in bits) in the protocol header 400. FIG. 4A illustrates an example embodiment of a protocol header 400 having an 8 bit Protocol Label field 408, and FIG. 4B illustrates an example embodiment of a protocol header 400 having a 16 bit Protocol Label Field 408. Table 3, below, illustrates an example mapping of values for the Label Length field to a number of bits of the Protocol Label 408.

Table 3: Label Length field

| Value | Type |
|-------|------|
| 0 | 8 bit Protocol Label |
| 1 | 16 bit Protocol Label |

The Protocol Label field may have a fixed length (for example, 8 or 16 bits) and may contain the Protocol Label 408. The Protocol Label 408 may uniquely identify one of a predetermined number of data flows carried over a channel. For example, an 8 bit Protocol Label may identify 256 unique data flows and a 16 bit Protocol Label may identify up to 65526 unique data flows. The channel can be specified by the PLP ID and the TS PID or by the PLP ID and the GSE Label. The transmitter 103 may assign unique mappings between the Protocol Label 408 and the TS PID, if using MPEG-2, or to the Protocol Label 408 and GSE Label, if using GSE. In an example, the Protocol Label 408 may depend on the value in the Compression Type (CT) field. The CT field may be mapped to source and destination addresses (for example, CT: 000, 001) or to a source address, a destination address, a UDP source port, and a UDP destination port (for example, CT: 010, 011, 100, 101).

When performing protocol overhead reduction on an original packet, the transmitter 103 may identify the compression to be applied, assign or retrieve the Protocol Label 408, and build the protocol packet by removing the static fields and including the Protocol Label 408. Upon receipt of the protocol packet, the mobile device 112 may use the Protocol Label 408 to identify and extract the dynamic data from the protocol packet corresponding to the compression type. The mobile device 112 may then reconstruct the fields of the original packet using the static data from the out-of-band signaling data and the extracted dynamic data. The mobile device 112 may also determine the inferable data as generated by predetermined mechanisms.

The O-Flags field may have a fixed size (for example, 4 bits) that identifies whether Optional fields are present in the protocol header 400. Optional fields may be present if used in the original packet. When generating the protocol packets, the transmitter 103 may add any optional fields from the original packet header (for example, IP options). The transmitter 103 may determine the presence of optional fields by processing flags in the original packet header (for example, the IPv4 or IPv6 packet header). The flags may be considered dynamic information and are thus included in the protocol header 400. The transmitter 103 may also determine that optional fields of the original packet are irrelevant and remove them (for example, IP is a hop-by-hop protocol) as they are used infrequently due to possible negative impacts to related routing operations.

The mapping of the O-Flags bits may depend on the compression type used. An example of mapping for compression types 000, 010, and 100 may be as follows. The first bit of the O-Flags 406 may indicate if Identification and Fragment Offset fields are present (1) or not (0) in the protocol header 400, the second bit may indicating if Flag field is present (1) or not (0), the third bit may indicating if the Header Length field is present (1) or not (0), and the fourth bit may be set to '0' and be reserved for the future use. For compression types 001, 011, and 101, the first bit of the O-Flags 406 may be used to indicated if a Next Header field is present (1) or not (0) in the protocol header 400, and the remaining three bits may be set to '0' and be reserved for the future use. After removing the static and inferable data, the transmitter 103 may encapsulate the dynamic data with the protocol header 400.

In addition to encapsulating the dynamic data with the protocol header 400, the transmitter 103 may generate signaling data based on the static data for use by the mobile device 112 in reconstructing the original packets from the protocol packets. In an example, the transmitter 103 may include the signaling data in information presented in service information and/or program specific information that are accessed by the mobile device 112 during service discovery for identifying data flows of a transport stream.

In DVB systems, for example, the mobile device 112 may perform service discovery to identify one or more data flows that are available within a transport stream to locate a data flow of interest. During service discovery, the mobile device 112 may process a number of tables in the transport stream to locate a data flow of interest. Examples of these tables may include a PSI/SI table, a network information table (NIT), an IP Notification Table (INT), a Program Association Table (PAT), and Program Map Table (PMT), each of which are described, for example, in "Digital Video Broadcasting (DVB); DVB specification for data broadcasting," ETSI EN 301 192 V.1.5.1 (2009-11), the contents of which are hereby incorporated by reference in its entirety. The tables may inform the mobile device 112 where a data flow of interest is within the transport stream and instruct the mobile device 112 how to process the data flow.

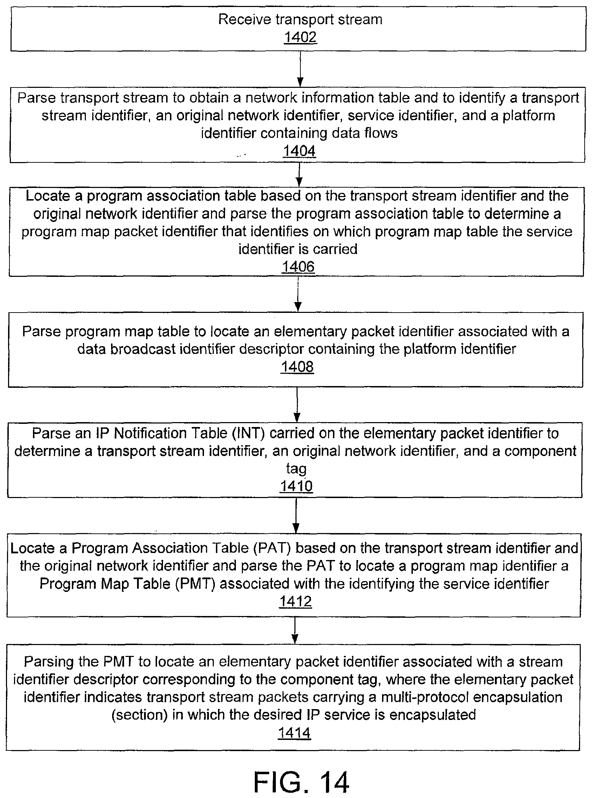

FIG. 14 illustrates an example flow diagram of method of a mobile device performing service discovery. In DVB systems, a mobile device 112 may parse a PSI/SI table to locate an IP flow in a transport stream. While the method of FIG. 14 describes discovering an IP flow, the method of FIG. 14 is applicable to other types of data flows.

In block 1402, the method may include receiving a transport stream by the mobile device 112 from the transmitter 103. In block 1404, the method may include parsing the transport stream by the mobile device 112 to obtain a network information table (NIT) and to identify a transport stream identifier, an original network identifier, service identifier, and a platform identifier containing IP flows. In DVB-T2 systems, a transport stream may be carried by one or more Physical Layer Pipes (PLP). The transport stream may include a T2_delivery_system_descriptor (T2dsd) in the NIT that maps a transport stream to the PLP carrying the transport stream.

In block 1406, the method may include locating a program association table based on the transport stream identifier and the original network identifier, and parsing the program association table to determine a program map packet identifier that identifies on which program map table the service identifier is carried. In block 1408, the method may include parsing a program map table to locate an elementary packet identifier associated with a data broadcast identifier descriptor containing the platform identifier. In block 1410, the method may include parsing an IP Notification Table (INT) carried on the elementary packet identifier by the mobile device 112 to determine a transport stream identifier, an original network identifier, and a component tag. In block 1412, the method may include locating a Program Association Table (PAT) based on the transport stream identifier and the original network identifier, and parsing the PAT to locate a program map identifier a Program Map Table (PMT) associated with the identifying the service identifier. In block 1414, the method may include parsing the PMT to locate an elementary packet identifier associated with a stream identifier descriptor corresponding to the component tag, where the elementary packet identifier indicates transport stream packets carrying a multi-protocol encapsulation section in which the desired IP service is encapsulated. The method may then end.

The tables processed in FIG. 14 may inform the mobile device 112 where a data flow of interest is within the transport stream and instruct the mobile device 112 how to process the data flow. In an example, the transmitter 103 may include signaling data (for example, a target descriptor associated with IP/MAC_stream_location_descriptor) in the INT table informing the mobile device 112 of the static data and how to reconstruct an original packet from a protocol packet transported within the TS. The INT table may be used as a directory of the active and transmitted data flows within the transport stream. The mobile device 112 may identify the target descriptor corresponding to a data flow of interest. The target descriptor may associate a destination address from a header of an original packet with a value of the Protocol Label field in a protocol header based on a type of compression used to compress the original packet. The mobile device 112 may use the compression type and the Protocol Label 408 to identify protocol packets transporting the data flow of interest for extraction and reconstruction of the original packets.

An example of the target descriptor is presented below in Table 4. Table 4 first lists fields (for example, descriptor_tag, descriptor_length, compression_type, and label_length) that are common to different types of protocol headers 400, and are followed by fields with information specific to the type of compression used.

Table 4

| NAME | number of bits |
|---|---|
| target_descriptor (){ | |
| descriptor_tag | 8 |
| descriptor_length | 8 |
| compression_type | 3 |
| label_length | 1 |
| if (compression_type == 000) { | |
| IPv4_destination_address | 32 |
| for(i=0;i<N;i++) { | |
| IPv4_source_address | 32 |
| Time_to_Live | 8 |
| Protocol | 8 |

(continued)

| NAME | number of bits |
|---|---|
| if (label_ length == 0) { | |
| Protocol Label | 8 |
| }else | |
| Protocol Label | 16 |
| } | |
| } | |
| } | |
| if (compression_type == 001) { | |
| IPv6 destination_address | 128 |
| for(i=0;i<N;i++) { | |
| IPv6_ source_address | 128 |
| Flow_Label | 20 |
| Hope_Limit | 8 |
| if (label_length == 0) { | |
| Protocol Label | 8 |
| }else | |
| Protocol Label | 16 |
| } | |
| } | |
| } | |
| if (compression_type == 010) { | |
| IPv4_destination_address | 32 |
| for(i=0;i<N;i++) { | |
| IPv4_source_address | 32 |
| Time_to_Live | 8 |
| Protocol | 8 |
| Ports_length | 8 |
| for(j=0;j<Ports_length;j++){ | |
| Udp_source_port | 16 |
| Udp_destination_port | 16 |
| if (label_length == 0) { | |
| Protocol Label | 8 |
| }else | |
| Protocol Label | 16 |
| } | |
| } | |
| } | |
| if (compression_type == 011) { | |

(continued)

| NAME | number of bits |
|---|---|
| IPv6_destination_address | 128 |
| for(i=0;i<N;i++ ){ | |
| IPv6_source_address | 128 |
| Flow_Label | 20 |
| Hope_Limit | 8 |
| Ports_length | 8 |
| for(j=0;j<Ports _ length;j++){ | |
| Udp_source_port | 16 |
| Udp_destination_port | 16 |
| if (label_length == 0) { | |
| Protocol Label | 8 |
| }else | |
| Protocol Label | 16 |
| } | |
| } | |
| } | |
| if (compression_type == 100) { | |
| IPv4_destination_address | 32 |
| for (i=0;i<N;i++) | |
| IPv4_source_address | 32 |
| Time_to_Live | 8 |
| Protocol | 8 |
| Ports_length | 8 |
| for (j=0;j<Ports_length;j++) { | |
| Udp_source_port | 16 |
| Udp _destination_port | 16 |
| SSRC | 32 |
| Timestamp_offset | 32 |
| Sequence_Number_offset | 32 |
| if (label length = 0) { | |
| Protocol Label | 8 |
| } else { | |
| Protocol Label | 16 |
| } | |
| } | |
| } | |
| if (compression type == 101) { | |
| IPv6_destination_address | 128 |

(continued)

| NAME | number of bits |
|---|---|
| for (i=0;i<N;i++) | |
| IPv6_ source _ address | 128 |
| Time_to_Live | 8 |
| Protocol | 8 |
| Ports_length | 8 |
| for (j=0;j<Ports_length;j++) { | |
| Udp_source_port | 16 |
| Udp_destination_port | 16 |
| SSRC | 32 |
| Timestamp_offset | 32 |
| Sequence_Number_offset | 32 |
| if (label length == 0) { | |
| Protocol Label | 8 |
| } else { | |
| Protocol Label | 16 |
| } | |
| } | |
| } | |
| } | |

The descriptor tag may be an 8-bit field that identifies the target descriptor within the INT. The INT may include multiple descriptors that are distinguishable using the descriptor tag. The descriptor length may be an 8-bit field specifying a total number of bytes of a data portion of the target descriptor following the descriptor length field. The compression type may be a 3-bit value specifying the compression type used as described above in Table 2. The label length, as described above in Table 3, may be a 1-bit value specifying the length of a Protocol Label 408 in bits.

Following the common fields in the target descriptor are fields that are specific to the type of compression used. The mobile device 112 may determine which compression type has been used from the compression type field 402 in the protocol header 400, and then identify the corresponding information from the target descriptor. Table 4, above, first lists information for reconstructing an IPv4 packet from a protocol packet, followed by information for reconstructing an IPv6 packet from a protocol packet, and so forth.

For a protocol packet associated with an original IPv4 packet, an IPv4 destination address may be a 32-bit field containing a destination address copied from an IPv4 header, and an IPv4 source address may be a 32-bit field containing a source address copied from the IPv4 header. The Time_to_Live may be an 8-bit field containing a Time_to_Live value copied from the IPv4 header. The Protocol may be an 8-bit field containing a Protocol value copied from the IPv4 header. The Protocol Label field may be an 8 or 16-bit field containing a Protocol Label 408 generated or identified by the transmitter 103 when applying the compression protocol to the IPv4 packet.

For a protocol packet associated with an original IPv6 packet, the IPv6_destination_address may be a 128-bit field containing a destination address copied from a header of the IPv6 packet. The IPv6_source address may be a 128-bit field containing a source address copied from the IPv6 header. The Flow_Label may be an 8-bit field containing Flow_Label field value copied from the IPv6 header. The Hope_Limit may be an 8-bit field containing a Hope_Limit field value copied from the IPv6 header.

For a protocol packet associated with an original packet having IPv4 and UDP headers or IPv6 and UDP headers, and in addition to the information provided above on IPv4 and IPv6, the Ports_length field may be an 8-bit field specifying a total number of source ports, destination ports and label fields following the ports length field. The Udp_source_port may be a 16-bit field containing a source_port field value copied from a UDP header. The Udp_destination_port may be a 16-bit field containing destination_port field value copied from the UDP header.

For a protocol packet associated with an original packet having IPv4, UDP, and RTP headers or IPv6, UDP, and RTP headers, and in addition to the information provided above on IPv4, IPv6, and UDP, the Synchronization Source (SSRC) may be a 32 bit field containing a SSRC value from a header of an RTP packet.

In addition to generating the signaling data (for example, the target descriptor), the transmitter 103 may generate a transport stream that includes the signaling data and protocol packets. In an example, the transmitter 103 may multiplex the signaling data and protocol packets to generate the transport stream. The transmitter 103 may encapsulate the protocol packets with MPE sections which then are carried by TS packets. The transport stream may also transport other data flows. The transmitter 103 may cause transmission of the transport stream to the mobile device 112.

During service discovery, the mobile device 112 may receive the transport stream and parse the signaling data corresponding to a data flow of interest. For example, a user may use the mobile device 112 to access an electronic service guide (ESG) to identify a plurality of available data flows. The mobile device 112 may receive user input selecting a data flow of interest (for example, a video program) from the ESG. The mobile device 112 may then extract access information of the data flow of interest. For example, the mobile device 112 may obtain a session description protocol (SDP) file that contains a destination address that may be used for filtering the available data flows. The mobile device 112 may then configure service filtering to receive the data flow of interest, such as, for example, tuning to receive packets associated with the destination address. The mobile device 112 may then determine whether an MPEG-2 TS is being used. If MPEG-2 TS is being used, the mobile device 112 may map an IP destination address, IP source address, and UDP ports to a physical layer pipe identifier (PLP ID), a transport stream packet identifier (PID), and a protocol header. For example, a channel carrying a transport stream may be identified by the PLP ID and TS PID. If GSE related signaling is being used instead of MPEG-2 TS, the mobile device 112 may map an IP destination address, IP source address, and UDP ports to a physical layer pipe identifier (PLP ID), a GSE label, and a compression protocol header. For example, a channel carrying a transport stream may be identified by the PLP ID and GSE label.

The mobile device 112 may tune to the channel carrying the transport stream and may parse signaling data from the transport stream carrying protocol packets of the data flow of interest. The mobile device 112 may extract the dynamic data by removing the protocol header from each protocol packet. The mobile device 112 may then determine the static data based on the signaling data and the protocol header, and reconstruct the original packets based on the static data and the dynamic data. For example, the mobile device 112 may be informed of the structure of the original packet (for example, may know the structure of an IPv4 packet), and may use the structure of the original packet, the signaling data, and the protocol header 400 to reconstruct the original packets based on the static data and the dynamic data.

The transmitter 103 may also reduce protocol overhead by compressing dynamic fields in the original packets that include data that changes from packet to packet in a predictable manner. For example, a value in a dynamic field may change by a fixed amount from packet to packet. The value of the dynamic field may include a relatively large number of bits, whereas the change in the value from packet to packet may be small relative to the size of the value. The transmitter 103 may compress the value of the dynamic field by determining an offset value that is static, and a delta value that is changes from packet to packet. The offset value may be static data that is removed from the original packets and included in the signaling data. The delta value may be included in the protocol header to indicate an amount of change from the previous packet. The offset values may also change from time to time, such as at a wrap around occurrences (for example, upon a counter reaching a highest value and then starting over at zero). The transmitter 103 may update the offset values presented in the signaling data so that the mobile device 112 is aware of that new offset value by analyzing new signaling data. Upon receipt of the protocol packets, the mobile device 112 may reconstruct the original header by combining the offset value with the delta value.

A time stamp field is an example of a field with data that changes from packet to packet in a predictable manner. The transmitter 103 may compress a value of a timestamp field occurring in a sequence of original packets. The transmitter 103 may determine an offset value for the timestamp field (for example TS_offset) that is included in the signaling data. The transmitter 103 may also determine a delta value (for example, TS_delta) that changes from packet to packet that is included in the protocol packet. For example, a protocol packet header may include a 32 bit timestamp_offset field. The mobile device 112 may receive the offset value in the signaling data and combine with the delta value in each protocol packet to reconstruct the value of the timestamp field in each original packet (for example, a value of time stamp field = TS_offset + TS_delta).

A sequence number field is another example of a field with data that changes from packet to packet in a predictable manner. The transmitter 103 may determine a sequence number offset (SN _offset) that includes the static part of the sequence number for inclusion in the signaling data. For example, the sequence number may have 16 bits, where the first 6 bits are the SN_offset and the last 10 bits are the dynamic part SN_delta. The mobile device 112 may determine the sequence number when reconstructing the original packets by concatenating SN_offset and SN_delta.

Accordingly, the transmitter 103 may perform overhead reduction on original packets by removing static and inferable data to generate protocol packets and may generate signaling data that contains the static data. During service discovery, the mobile device 112 may identify a data flow of interest that includes the protocol packets, obtain the signaling data, and reconstruct the original packets based on the signaling data and the protocol packets.

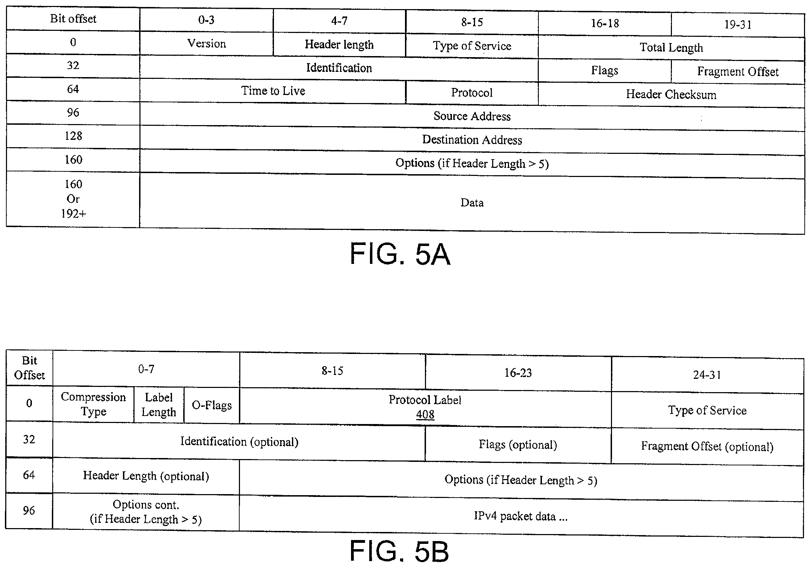

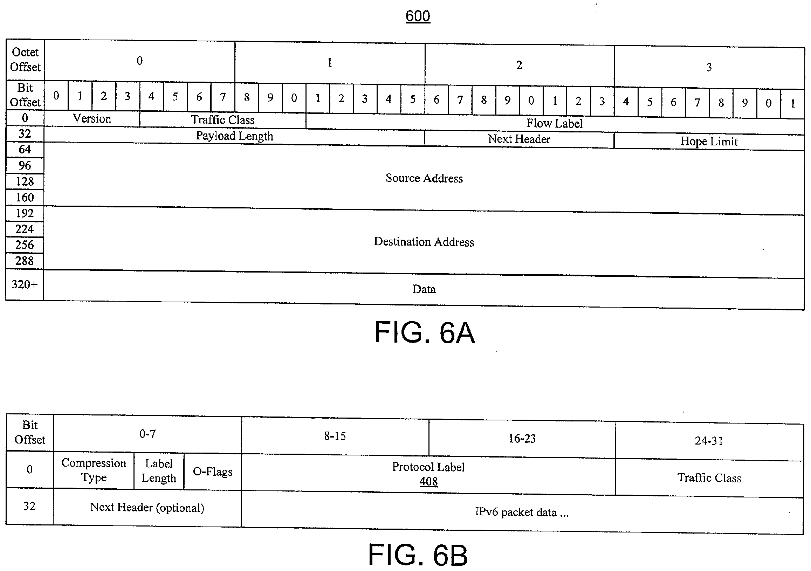

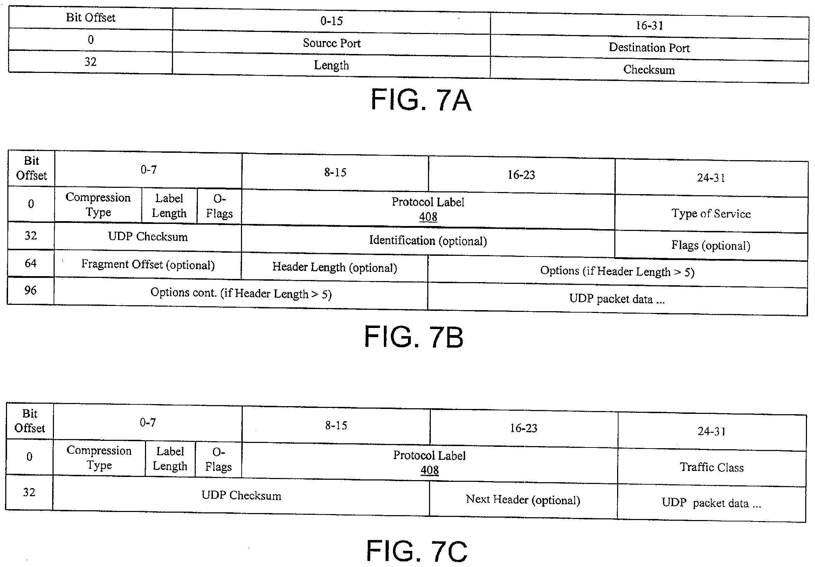

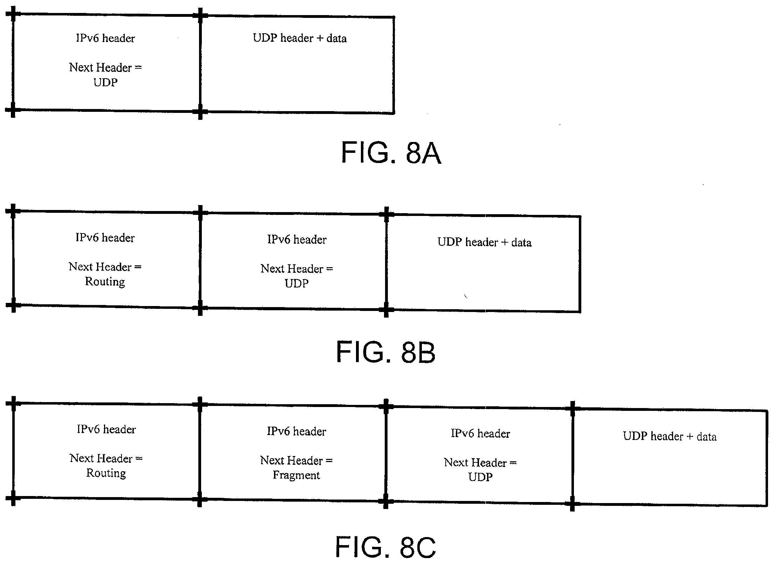

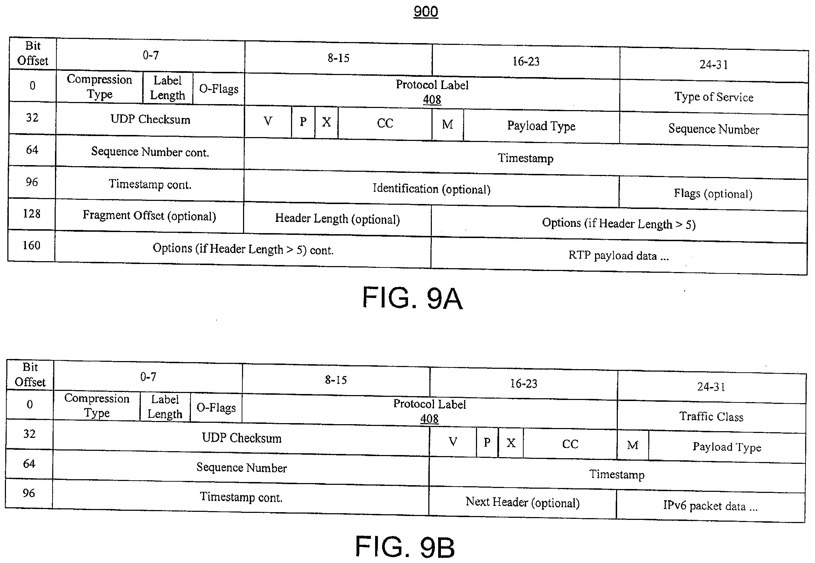

The following provides detailed examples of applying the above protocol overhead reduction concepts to reduce protocol overhead for original packets including different types of headers. FIGs. 5A-B depict an IPv4 packet and an example protocol packet generated based on the IPv4 packet, FIGs. 6A-B depict an IPv6 packet and an example protocol packet generated based on the IPv6 packet, FIGs. 7A-C depict a UDP packet, and an example protocol packet generated based on a original packet having UDP and IPv4 or IPv6 headers, FIGs. 8A-C depict example extension headers for an IPv6 packet, FIGs. 9A-B depict an example protocol packet generated based on an original packet having IPv4 or IPv6, UDP, and RTP headers. Also, the length of the Protocol Label Field in each of FIGs. 5B, 6B, 7B-C, and 9A-B is 16 bits. An 8 bit Protocol Label Field also may be used by shifting the fields following the Protocol Label Field by 8 bits, similar to the difference shown between Figs. 4A-B. Compression of headers used in UDP, IPv4, IPv6, and RTP protocols are discussed below, however, the concepts described herein may be applied to headers generated using other protocols.

FIG. 5A illustrates an IPv4 packet and header structure, and FIG. 5B illustrates an example protocol packet with a header generated by applying the compression protocol described above to an IPv4 packet. The first header field in an IP packet may be a four-bit Version field. For IPv4, the Version field may have a value of 4. A Header Length field may be a length of IPv4 header in 32 bit words to point to a beginning of a Data field. The Length field may have a minimum value (for example, five 32 bit words) based on the minimum size of the IPv4 header. A Type of Service field may provide an indication of abstract parameters of a desired quality of service. A Total Length field may be a total length of the IPv4 packet, measured in octets, including the IPv4 header and Data field. An Identification field may be an identifying value assigned by a source of the IPv4 packet to aid in assembling fragments of a datagram. A Flags field may include various control flags. A Fragment Offset field may indicate where in a datagram a fragment belongs. A Time to Live field may indicate a maximum time a datagram is allowed to remain in an Internet system. If the value of the Time to Live field is zero, then the datagram may be destroyed. A Protocol field may indicate a next level protocol used in a data portion of an Internet datagram. A Header Checksum field may include a checksum on the IPv4 header. Since some header fields change (for example, time to live) during transport, the Header Checksum field may be recomputed and verified at each point where the IPv4 header is processed. The source and destination address fields may be 32 bits each and may respectively identify addresses of a source and destination for the IPv4 packet. The Data field may include the data transported by the IPv4 packet.

FIG. 5B illustrates an example protocol packet with a header structure generated by applying the overhead reduction protocol described above to the IPv4 packet. The Compression Type (3 bits) field may be set to a value (for example, 000) to indicate that an IPv4 header was compressed. The Label Length field (1 bit) may indicate a length of the Protocol Label 408. In this example, the Label length field may indicate that the Protocol Label 408 is 16 bits. The O-Flags field (4 bits) may identify whether optional fields are present in the header structure of the protocol header. For example, if the first bit of the O-Flags field is set to 1, then the Identification and Fragment Offset fields may be present in the protocol header. When the bit is set to 0, the Identification and Fragment Offset fields are not included in the protocol packet because the IPv4 packet was not fragmented. In other words, the Identification and Fragment Offset fields may only contain meaningful data when the IPv4 packet is fragmented. Otherwise, the values of the Identification and Fragment Offset fields are predetermined and hence contain static data that can be removed from the protocol header. If the second bit of the O-Flags field is set to 1, then the Flags field is present in the protocol header. If the third bit is set to 1, then the Header Length field is present (for example, if the Header Length is bigger than five 32 bit words).

The Label field (8 or 16 bits) may contain the Protocol Label 408 of the protocol packet. When Compression Type 000 is used, the Protocol Label 408 may be unique for a given pair of IPv4 source address and IPv4 destination address. The Protocol Label 408 may allow multiplexing of 256 (8bits) or 65536 (16 bits) different data flows into the TS. Due to unique mapping of IPv4 source address and IPv6 destination address to the Protocol Label 408, the mobile device 112 may extract a data flow of interest from the TS. The Header Length field (8 bits) may reserve the first 4 bits for future use and may contain Header Length value copied from IPv4 header in the remaining 4 bits. Each of the Type of Service field (8 bits), Identification field (16 bits), Flags field (8 bits), and Fragment Offset field (8 bits) may be copied from the IPv4 header. The Flags field may comprise information from the Flags field in the IPv4 header and may be extended by reserved bits to occupy 8 bits in the structure of the protocol header.

The Options field may be present if header length is bigger than five 32 bit words. The size of the Options field may equal (Header Field - 5)*32 bits. Thus, for IPv4, the Type of Service Field, Identification field, Flags field, Fragment Offset Field, Header length field, and the Data field may include dynamic data, whereas the other fields may include static or inferable data that may be included in the signaling data defined by the target descriptor rather than in the protocol packet illustrated in FIG. 5B. Each of the fields marked as optional may or may not be used in the protocol header. If not used, the protocol header structure may be reduced (for example, have less overhead) and the Data field may occur earlier in the protocol packet.

FIG. 6A illustrates an IPv6 packet and header structure, and FIG. 6B illustrates an example protocol packet with a header structure generated by applying the overhead reduction protocol described above to an IPv6 packet. FIG. 6A illustrates an IPv6 header having the following fields. A Version field may indicate a version of the internet protocol used to generate the internet datagram. In this example, the Version field may include a bit sequence '0110' representing an encoding of the number '6.' A Traffic Class field may identify a priority of data being transported by the packet and may be an 8 bit field. Priority values of the Traffic Class field may be subdivided into ranges: traffic where a source provides congestion control and non-congestion control traffic. A Flow Label field may store 20 bits and provide quality of service (QoS) management. The Flow Label field may give special service to real-time applications. A Payload Length field may indicate a size of the payload in octets (16 bits). When cleared to zero, the option may indicate a "Jumbo payload" (for example, hop-by-hop). A Next Header field may specify a next encapsulated protocol in the original packet. The values of the Next Header field may be compatible with those specified for the IPv4 Protocol field (8 bits). Extension headers, if any, may be considered part of the payload and included in the length count. A Hop Limit field may replace the Time to Live field of IPv4 (8 bits). Source and Destination address fields may each be 128 bits and respectively identify addresses of a source and destination for the IPv6 packet. The Data field may include the data transported by the IPv6 packet.

FIG. 6B illustrates an example protocol packet generated by applying the overhead reduction protocol described above to the IPv6 packet. The Compression Type field (3 bits) may be set to value 001 to indicate that an IPv6 packet was compressed. The Label Length (1 bit) field may indicate the length of the Protocol Label 408 in bits. In this example, the Label length field may indicate that the Protocol Label 408 is 16 bits. A first bit of the O-Flags field (4 bits) may indicate if a Next Header field is present (1) or not (0). If set to 0, the mobile device 112 may assume that a UDP packet is after the Traffic Class field. The remaining 3 bits of the O-Flags field may be set to zero and may be reserved for the future use. The Label field (8 or 16 bits) may include the Protocol Label 408. The Traffic Class field (8 bits) may be copied from the IPv6 header. The Next Header field (8 bits) may be optional as specified by the O-Flags field and, if present, may be the value copied from the IPv6 header. If not present, the protocol packet header length is reduced (for example, has less overhead) and the packet data starts earlier in the protocol packet. The Data field may be copied from the Data field of the IPv6 packet. For IPv6, the Traffic Class field and the Next Header field, and the Data field may include dynamic data, and the remaining data may be considered static or inferable and can thus be omitted. The fields marked as optional in FIGs. 6B may or may not be used. If not used, the protocol header structure may be reduced (for example, have less overhead) and the Data field may occur earlier in the protocol packet.

FIG. 7A illustrates a UDP packet and header structure, FIG. 7B illustrates an example protocol packet and header structure generated by applying the overhead reduction protocol described above to a packet having UDP and IPv4 headers, and FIG. 7C illustrates an example protocol packet and header structure generated by applying the overhead reduction protocol described above to a packet having UDP and IPv6 headers.

FIG. 7A illustrates an example structure of a UDP packet. A Source Port field may identify a sending port and may be the port to reply to if needed. If not used, the value of the Source Port field may be zero. The Destination Port field may identify a destination port of the UDP packet. A Length field may be a 16-bit field that specifies the length in bytes of the entire UDP packet (for example, length of both header and data). The minimum length may be the length of the UDP header (for example, 8 bytes in FIG. 7A example). The field size may have a theoretical limit of 65,535 bytes (for example, 8 byte header + 65527 bytes of data) for a UDP packet. For example, the practical limit for the data length, which may be imposed by the underlying IPv4 protocol, is 65,507 bytes. The Checksum field may be a 16-bit field used for error-checking of the header and data. The algorithm for computing the checksum may be different for transport over IPv4 and IPv6. If the checksum is omitted in IPv4, the value of the Checksum field may be all-zeros.

FIG. 7B illustrates an example protocol packet and header structure generated by applying the overhead reduction protocol described above to a packet having UDP and IPv4 headers. The Compression Type field (3 bits) may be set to a value of '010' to indicate that IPv4 header and UDP headers were compressed. The Label Length field (1 bit) may indicate the Protocol Label 408. In this example, the Label length field may indicate that the Protocol Label 408 is 16 bits. The O-Flags field (4 bits) may identify whether optional fields are present in the protocol header. For example, if a first bit of the O-Flags field is set to '1,' then the Identification and Fragment Offset fields are present in the protocol packet. If the second bit of the O-Flags field is set to '1,' then the Flags field is present. If the third bit of the O-Flags field is set to '1,' then the Header Length field is present and is bigger than five 32 bit words. The fourth bit may be set to zero and reserved for future use. The Label field (8 or 16 bits) may identify the Protocol Label 408.

The first 4 bits of the Header Length field (8 bits) may be reserved for future use and the remaining 4 bits may contain a Header Length value copied from the IPv4 header. The values of the Type of Service field (8 bits), Identification field (16 bits), Flags field (8 bits), and Fragment Offset field (8 bits) each may be copied from the IPv4 header. The Flags field may comprise the information from the flag field in the IPv4 header and may be extended by some reserved bits so that the flags occupy 8 bits in the protocol header structure. The Options field may be present if header length is bigger than five 32 bit words, where the size of the Options field is equal to (Header Field - 5)*32 bits. The UDP Checksum field (16 bits) may be copied from the UDP header. The Data field may include data carried by the UDP packet. Thus, the Type of Service field, UDP checksum field, Identification field, Flags Field, Fragment Offset field, Header Length field, and Data fields may include dynamic data for a packet that includes UDP and IPv4 headers, and the remaining fields may be considered static or inferable, and thus can be omitted. Each of the fields marked as optional in FIG. 7B may or may not be used. If not used, the protocol header structure may be reduced (for example, have less overhead) and the Data field may occur earlier in the protocol packet.

FIG. 7C illustrates an example protocol packet and header structure generated by applying the compression protocol described above to a packet having UDP and IPv6 headers. The Compression Type field (3 bits) may be set to a value of '011' to indicate that IPv6 and UDP headers were compressed. The Label Length field (1 bit) may indicate the length of the Protocol Label 408 in bits. In this example, the Label length field may indicate that the Protocol Label 408 is 16 bits. A first bit of the O-Flags field (4 bits) may indicate whether a Next Header field is present (1) or not (0) in the compression protocol header. If set to 0, the mobile device 112 may assume that data belonging to UDP packet starts after a UDP Checksum field. The remaining 3 bits of the O-Flags field may be set to zero and reserved for the future use. The Protocol Label field (8 or 16 bits) may include the Protocol Label 408. The Traffic Class field (8 bits), Next Header field (8 bits), and the UDP Checksum (16 bits) may be copied from the UDP header. The Data field may be data carried by UDP packet. Thus, the Traffic class, UDP checksum, Next Header, and Data fields may include dynamic data, and the remaining fields of a packet with UDP and IPv6 headers may be considered static or inferable, and thus can be omitted. Each of the fields marked as optional in FIG. 7C may or may not be used. If not used, the protocol header structure may be reduced (for example, have less overhead) and the Data field may occur earlier in the protocol packet.

In IPv6, optional internet-layer information may be encoded in separate headers that may be placed between the IPv6 header and an upper-layer header in the IPv6 packet. There are a small number of such extension headers, each identified by a distinct Next Header value. As illustrated in example embodiments in FIGs. 8A-C, an IPv6 packet may carry zero (see Fig. 8A), one (see FIG. 8B), or more extension headers (see FIG. 8C), each identified by the Next Header field of the preceding header. If an IPv6 packet carries one or more extension header, then the compression protocol header may indicate a Compression Type field (see FIG. 7C) with the value of "011" and the extension headers may be carried between the UDP Checksum field and the Next Header field.

FIG. 9A illustrates an example protocol packet and header structure generated by applying the overhead reduction protocol described above to an original packet having RTP, UDP, and IPv4 headers, and FIG. 9B illustrates an example protocol packet and header structure generated by applying the compression protocol described above to an original packet having RTP, UDP, and IPv6 headers. The Compression Type Field may have a value of '100' to indicate compression of a packet having RTP, UDP, and IPv4 headers, and may have a value of '101' to indicate compression of a packet having RTP, UDP, and IPv6 headers. Each of the fields marked as optional in FIGs. 9A-B may or may not be used. If not used, the protocol header structure may be reduced (for example, have less overhead) and the Data field may occur earlier in the protocol packet.

An RTP stream may be identified by a source IP address and port, and destination IP address and port. The Version (V) and Synchronization Source (SSRC) fields of an RTP header may be considered as static fields. The V field may indicate the version of the RTP protocol being used. The SSRC field may include a unique identifier of the synchronization source of the RTP stream. To preserve byte alignment, the V field may be treated as a dynamic field and the SSRC may be omitted from the protocol header and signaled out-of-band in the signaling data.

The following RTP fields may be considered dynamic as they may change from packet to packet during an RTP session. The Padding (P) field may be a 1 bit flag that indicates the presence of padding data. The Extension (X) field may be a 1 bit flag that indicates the presence of an RTP header extension. If the bit in the X field is set, the Extension Header field may include a set of extension headers. A mobile device 112 may ignore the extension headers and the X bit field may be forced to 0 by the transmitter 103 to remove any RTP extension headers.

The Contributing Source (CSRC) Count (CC) field may be a 4 bit field that indicates the number of contributing sources to the RTP session. If the CC field is not 0, a CSRC field may list the identifiers of all contributing sources to the current RTP session. The Marker (M) field may be a 1 bit marker flag that indicates the last packet in an access unit. The Payload Type (PT) field may be a 7 bit field that identifies the media configuration currently used in the RTP session.

The following RTP fields may change every one or few packets and may be considered to have dynamic data. The Sequence Number field may give the sequence number of the current RTP packet that starts at a random offset. Instead of giving the full value, an offset to the value that is indicated in the signaling data (see also Table 4, above, Sequence_Number_offset) may be used permitting use of a smaller field for the signaling (for example 8 or 16 bits) in the protocol packet.

The Timestamp field may give the presentation time of the contained media data in the given media clock. The value of the Timestamp field may start with a random offset. Instead of signaling the full field, only an offset to the value signaled as part of the signaling data is used (see also Table 4, above, timestamp_offset). The offset may be represented by a small field (for example 16 bits) and may wrap-around as long as the information in the signaling data is updated simultaneously.

FIG. 9B illustrates an example protocol packet and header structure generated by applying the overhead reduction protocol described above to a packet having RTP, UDP, and IPv6 headers. The V field may be a 2 bit field copied from the RTP header. The P field may be a 1 bit field copied from the RTP header. The X field may be a 1 bit field copied from the RTP header. The CC field may be a 4 bit field copied from the RTP header. The Payload Type field may be a 7 bit field copied from the RTP header. The Sequence Number field may be a 16 bit field copied from the RTP header. The Timestamp field may be a 32 bit field copied from the RTP header. Thus concludes various examples of applying the overhead reduction protocol to generate protocol packets to reduce an amount of overhead in original packets. The selected protocols are merely examples, and other protocols may also be used.

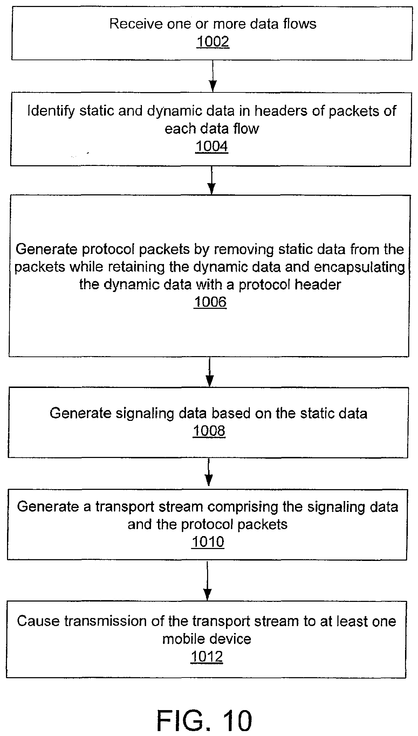

FIG. 10 illustrates an example method for generating a transport stream including protocol packets.

In block 1002, the method may include receiving one or more data flows from one or more content sources 104. The transmitter 103 may receive one or more data flows from one or more content sources 104, where each data flow may be a stream of original packets.

In block 1004, the method may include identifying static and dynamic data in headers of the original packets of each data flow. Prior to transmission to the mobile device 112, the transmitter 103 may analyze the original packet headers of each data flow to identify static data and dynamic data.

In block 1006, the method may include generating protocol packets by removing static data from the original packets while retaining the dynamic data and encapsulating the dynamic data with a protocol header. The transmitter 103 may process the packet headers to generate values for the fields of the protocol header 400. The transmitter 103 may encapsulate the dynamic data with the protocol header to form protocol packets.

In block 1008, the method may include generating signaling data based on the static data. The transmitter 103 may generate a target descriptor, as described above, based on the static data.

In block 1010, the method may include generating a transport stream comprising the signaling data and the protocol packets. The transmitter 103 may multiplex or otherwise combine the signaling data and the protocol packets. The transport stream may also include other data flows. When forming the transport stream, the transmitter 103 may separately perform the compression protocol described on original packets from each data flow.

In block 1012, the method may include causing transmission of the transport stream to at least one receiver apparatus, such as, for example, a mobile device or terminal, a set top box/unit, etc. The method of FIG. 10 may then end.

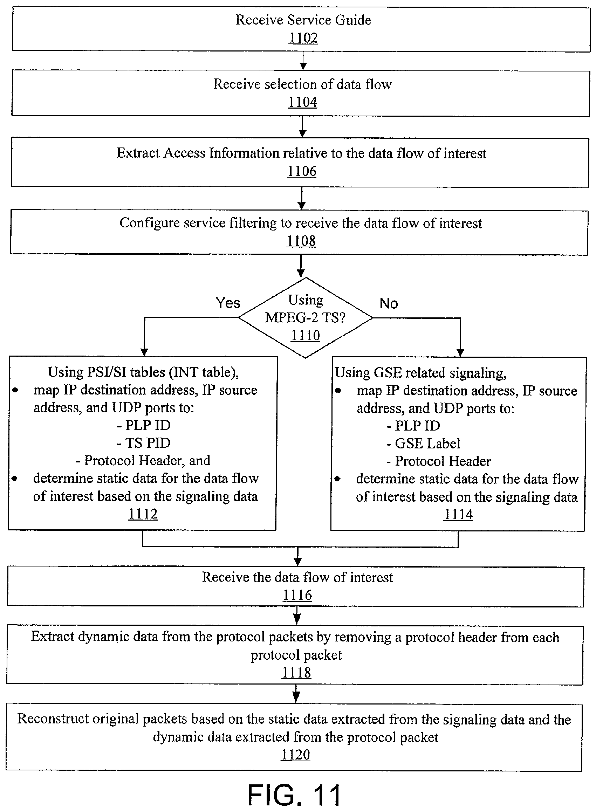

FIG. 11 illustrates an example flow diagram of a method for identifying a data flow of interest. The method described in FIG. 11 may be implemented by a receiving apparatus, such as, for example, mobile device 112. In block 1102, the method may include receiving an electronic service guide that identifies a plurality of available data flows. In block 1104, the method may include receiving user input to select a data flow of interest from the service guide. In block 106, the method may include extracting access information relative to the data flow of interest. In block 1108, the method may include configuring service filtering to receive the data flow of interest. In block 1110, the method may include determining whether an MPEG-2 TS is being used. If so, the method may proceed to block 1112, and, if not, the method may proceed to block 1114. In block 1112, the method may include, using PSI/SI tables and an INT table, mapping an IP destination address, IP source address, and UDP ports to a physical layer pipe identifier (PLP ID), a transport stream packet identifier (PID), and a compression protocol header and determining static data for the data flow of interest based on the signaling data. In block 1114, the method may include mapping an IP destination address, IP source address, and UDP ports to a physical layer pipe identifier (PLP ID), a GSE label, and a compression protocol header and determining static data for the data flow of interest based on the signaling data. Blocks 1112 and 1114 may then proceed to block 1116.

In block 1116, the method may include processing the data flow of interest in the transport stream. In block 1118, the method may include extracting dynamic data from the protocol packets by removing a protocol header from each protocol packet. For example, the mobile device 112 may process the signaling data to identify a Protocol Label 408 corresponding to the data flow of interest, and may identify protocol packets in the transport stream having the Protocol Label 408. The mobile device 112 may remove the protocol header to extract the dynamic data from the protocol packets.

In block 1120, the method may include reconstructing original packets based on the static data and the dynamic data. For example, the mobile device 112 may determine the static data from the signaling data, and may reconstruct original packets (for example, IPv4 packets) based on knowledge of the structure of the original packet (for example, the location of fields of an IPv4 header), the static data, and the dynamic data. The method of FIG. 11 may then end.

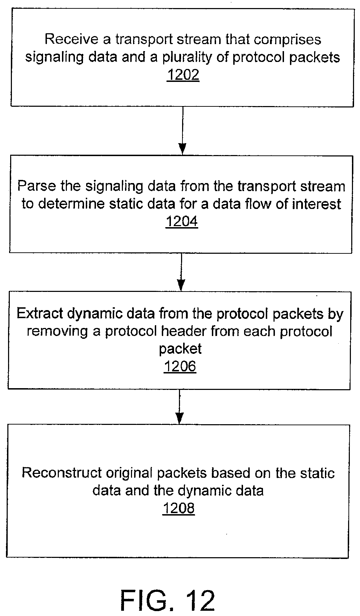

FIG. 12 illustrates an example flow diagram of a method for processing a transport stream generated using the method of FIG. 10. The method may begin in block 1202.

In block 1202, the method may include receiving a transport stream that comprises signaling data and a plurality of protocol packets. In an example, the mobile device 112 may initiate service discovery by tuning to a channel that transports a transport stream. The transport stream may include signaling data multiplexed with a plurality of protocol packets.

In block 1204, the method may include parsing the signaling data from the transport stream to determine static data for a data flow of interest. The mobile device 112 may parse the signaling data from the transport stream to locate a data flow of interest. For example, the mobile device 112 may first display an ESG listing available data flows, and, in response to user selection, may identify the target descriptor for the data flow of interest. Using the target descriptor, the mobile device 112 may determine the static data, including a Protocol Label 408, for the data flow of interest. The mobile device 112 may then filter the data flow of interest from the transport stream to identify protocol packets having the Protocol Label 408.

In block 1206, the method may include extracting dynamic data from the protocol packets by removing a protocol header from each protocol packet. The mobile device 112 may remove the protocol header to extract the dynamic data from the protocol packets having the Protocol Label 408.

In block 1208, the method may include reconstructing original packets based on the static data and the dynamic data. For example, the mobile device 112 may reconstruct IPv4 packets based on knowledge of the structure of an IPv4 header, the static data, and the dynamic data. The method of FIG. 12 may then end.

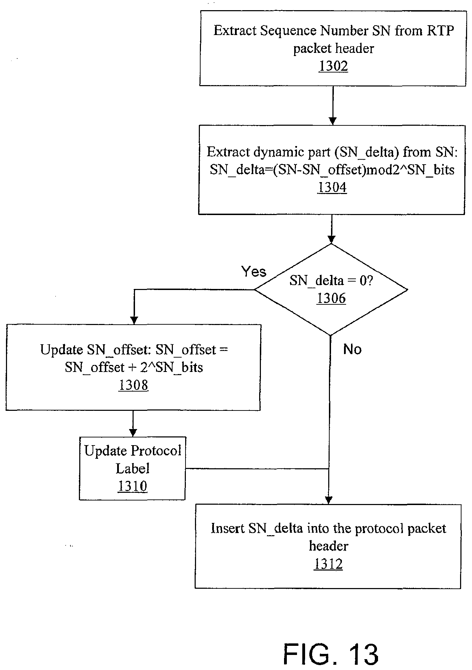

FIG. 13 illustrates an example flow diagram of a method for generating a protocol packet based on compressing a sequence number field of an original RTP packet. The method of FIG. 13 may be implemented by the transmitter 103. In block 1302, the method may include extracting a sequence number SN from a header of an RTP packet. In block 1304, the method may include extracting a static part and a dynamic part from the sequence number. For example, the transmitter 103 may determine the result of the following equation:

$$ SN\_delta = (SN - SN\_offset) mod2^\wedge SN\_bits, $$

Where SN is the sequence number, SN_offset is the sequence number offset, mod2 is the modulo 2, and SN_bits is the number of bits in the SN field (see also FIG. 9A).

In block 1306, the method may include determining whether the SN_deta is zero. SN_delta having a value of zero indicates no change from a preceding packet. If zero, the method may proceed to block 1308, and if not, the method may proceed to block 1312.

In block 1308, the method may include updating the SN_offset. For example, the transmitter 103 may determine the result of the following equation.

$$ SN\_offset_i = SN\_offset_{(i-1)} + 2^\wedge SN\_bits. $$

Thus, the transmitter 103 may update the current $SN\_offset_i$ as a function of the preceding value of the offset $SN\_offset_{(i-1)}$.

In block 1310, the method may include updating the value of the Protocol Label 408.

In block 1312, the method may include inserting SN_delta into the protocol packet header. The method of FIG. 13 may then end.

Reduction of protocol overhead may improve bandwidth efficiency at least for unidirectional channels. Moreover, the reduced protocol overhead as described herein may not require any inter-packet dependencies, and thus an error in reconstructing an original packet may not cause errors when reconstructing other original packets.

One or more aspects may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device or other apparatus. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), application specific integrated circuits (ASIC), and the like.

The invention is defined by the appended claims.

## Claims

1. A method comprising:

   processing a data flow comprising a plurality of packets;
   identifying (1004) static data and dynamic data in packet headers of the plurality of packets;
   generating (1006) a plurality of protocol packets by removing the static data from the packet headers, retaining the dynamic data, and assigning a protocol label to the plurality of protocol packets;
   generating (1008) signaling data based on the static data, a first data field indicating a compression type of the packet headers of the plurality of protocol packets and a second data field identifying the data flow; and transmitting the signaling data over a logical channel different from a channel over which the protocol packets are transmitted, wherein the signaling data is multiplexed with the plurality of protocol packets.

2. The method of claim 1, wherein a header of each of the plurality of protocol packets comprises the protocol label, wherein the protocol label associates the header with the signaling data.

3. The method of claim 1 or 2, further comprising:

   determining that the packet headers each comprise a field having dynamic information; and
   determining an offset value and a delta value based on the dynamic information; wherein the signaling data comprises the offset value and the dynamic data comprises the delta value.

4. The method of any preceding claim, wherein the signaling data is part of service information or program specific information contained in a transport stream.

5. An apparatus (103) comprising:

   means for processing a data flow comprising a plurality of packets;
   means for identifying static data and dynamic data in packet headers of the plurality of packets;
   means for generating a plurality of protocol packets by removing the static data from the packet headers, retaining the dynamic data, and assigning a protocol label to the plurality of protocol packets;
   means for generating signaling data based on the static data, a first data field indicating a compression type of the packet headers of the plurality of protocol packets and a second field identifying the data flow; and
   means for transmitting the signaling data over a logical channel different from a channel over which the protocol packets are transmitted, wherein the signaling data is multiplexed with the plurality of protocol packets.

6. The apparatus of claim 5, wherein a header of each of the plurality of protocol packets comprises the protocol label, wherein the protocol label associates the header with the signaling data.

7. The apparatus of claims 5 or 6, further comprising:

   means for determining that the packet headers each comprise a field having dynamic information; and
   means for determining an offset value and a delta value based on the dynamic information; wherein the signaling data comprises the offset value and the dynamic data comprises the delta value.

8. A method comprising:

   processing a data stream that comprises signaling data multiplexed with a plurality of protocol packets comprising a protocol label;
   parsing (1204), by a processor, the signaling data from the data stream, wherein the signaling comprises static data, a first data field indicating a compression type of packet headers of the plurality of packets, and a second data field identifying the plurality of protocol packets;
   using (1206) the protocol label to identify the plurality of protocol packets and to extract dynamic data from the plurality of protocol packets;
   determining static data based on the signaling data; and
   reconstructing (1208) a plurality of packets based on the static data and the dynamic data, wherein the signaling data is received from a logical channel different than a channel from which the plurality of protocol packets is received.

9. The method of claim 8, wherein the reconstructing of the plurality of packets is based on predetermined information indicating a structure of the plurality of packets.

10. The method of claims 8 or 9, wherein the reconstructing of the plurality of packets is further based on inferable data.

11. The method of any of claims 8 to 10, wherein the signaling data is part of service information or program specific information contained in a transport stream.

**12.** An apparatus (210) comprising:

means for processing a data stream that comprises signaling data multiplexed with a plurality of protocol packets comprising a protocol label;

means for parsing the signaling data from the data stream, wherein the signaling comprises static data, a first data field indicating a compression type of packet headers of the plurality of packets, and second data field identifying the plurality of protocol packets;

using the protocol label to identify the plurality of protocol packets and to extract dynamic data from the plurality of protocol packets;

means for determining static data based on the signaling data; and

means for reconstructing a plurality of packets based on the static data and the dynamic data, wherein the signaling data is received from a logical channel different than a channel from which the plurality of protocol packets is received.

**13.** The apparatus of claim 12, wherein the means for reconstructing the plurality of packets is based on predetermined information indicating a structure of the plurality of packets.

**14.** The apparatus of claims 12 or 13, further comprising:

means for causing presentation of a service guide; and

means for receiving selection of a program associated with the plurality of protocol packets.

**15.** The apparatus of any of claims 12 to 14, wherein the means for reconstructing the plurality of packets is further based on inferable data.


**Patentansprüche**

**1.** Verfahren, Folgendes umfassend:

Verarbeiten eines Datenstroms, der mehrere Pakete umfasst;

Identifizieren (1004) statischer Daten und dynamischer Daten in Paketköpfen der mehreren Pakete;

Erzeugen (1006) mehrerer Protokollpakete durch Entfernen der statischen Daten aus den Paketköpfen, Behalten der dynamischen Daten und Zuweisen eines Protokollmarkers zu den mehreren Protokollpaketen;

Erzeugen (1008) von Signalisierungsdaten auf der Grundlage der statischen Daten, eines ersten Datenfelds, das einen Kompressionstyp der Paketköpfe der mehreren Protokollpakete angibt, und eines zweiten Datenfelds, das den Datenstrom identifiziert; und

Übertragen der Signalisierungsdaten über einen logischen Kanal, der verschieden ist von einem Kanal, über den die Protokollpakete übertragen werden, wobei die Signalisierungsdaten mit den mehreren Protokollpaketen multiplexiert werden.

**2.** Verfahren nach Anspruch 1, wobei ein Kopf jedes der mehreren Protokollpakete den Protokollmarker umfasst, wobei der Protokollmarker den Kopf zu den Signalisierungsdaten zuordnet.

**3.** Verfahren nach Anspruch 1 oder 2, weiterhin Folgendes umfassend:

Bestimmen, dass die Paketköpfe jeweils ein Feld mit dynamischen Informationen umfassen; und

Bestimmen eines Versatzwerts und eines Delta-Werts auf der Grundlage der dynamischen Informationen; wobei die Signalisierungsdaten den Versatzwert umfassen und die dynamischen Daten den Delta-Wert umfassen.

**4.** Verfahren nach einem der vorhergehenden Ansprüche, wobei die Signalisierungsdaten Teil der Dienstinformationen oder programmspezifischer Informationen sind, die in einem Transportstrom enthalten sind.

**5.** Vorrichtung (103), Folgendes umfassend:

Mittel zum Verarbeiten eines Datenstroms, der mehrere Pakete umfasst;

Mittel zum Identifizieren statischer Daten und dynamischer Daten in Paketköpfen der mehreren Pakete;

Mittel zum Erzeugen mehrerer Protokollpakete durch Entfernen der statischen Daten aus den Paketköpfen, zum Behalten der dynamischen Daten und zum Zuweisen eines Protokollmarkers zu den mehreren Protokollpaketen;

Mittel zum Erzeugen von Signalisierungsdaten auf der Grundlage der statischen Daten, eines ersten Datenfelds, das einen Kompressionstyp der Paketköpfe der mehreren Protokollpakete angibt, und eines zweiten Felds, das den Datenstrom identifiziert; und

Mittel zum Übertragen der Signalisierungsdaten über einen logischen Kanal, der verschieden ist von einem Kanal, über den die Protokollpakete übertragen werden, wobei die Signalisierungsdaten mit den mehreren Protokollpaketen multiplexiert werden.

6. Vorrichtung nach Anspruch 5, wobei ein Kopf jedes der mehreren Protokollpakete den Protokollmarker umfasst, wobei der Protokollmarker den Kopf zu den Signalisierungsdaten zuordnet.

7. Vorrichtung nach Anspruch 5 oder 6, weiterhin Folgendes umfassend:

Mittel zum Bestimmen, dass die Paketköpfe jeweils ein Feld mit dynamischen Informationen umfassen; und
Mittel zum Bestimmen eines Versatzwerts und eines Delta-Werts auf der Grundlage der dynamischen Informationen; wobei die Signalisierungsdaten den Versatzwert umfassen und die dynamischen Daten den Delta-Wert umfassen.

8. Verfahren, Folgendes umfassend:

Verarbeiten eines Datenstroms, der Signalisierungsdaten umfasst, die mit mehreren Protokollpaketen multiplexiert sind, die einen Protokollmarker umfassen;
Parsing (1204) der Signalisierungsdaten aus dem Datenstrom durch einen Prozessor, wobei die Signalisierung statische Daten, ein erstes Datenfeld, das einen Kompressionstyp der Paketköpfe der mehreren Pakete angibt, und ein zweites Datenfeld umfasst, das die mehreren Protokollpakete identifiziert;
Verwenden (1206) des Protokollmarkers, um die mehreren Protokollpakete zu identifizieren und dynamische Daten aus den mehreren Protokollpaketen zu extrahieren;
Bestimmen statischer Daten auf der Grundlage der Signalisierungsdaten; und
Rekonstruieren (1208) mehrerer Pakete auf der Grundlage der statischen Daten und der dynamischen Daten, wobei die Signalisierungsdaten aus einem logischen Kanal empfangen werden, der verschieden ist von einem Kanal, aus dem die mehreren Protokollpakete empfangen werden.

9. Verfahren nach Anspruch 8, wobei das Rekonstruieren der mehreren Pakete auf vorgegebenen Informationen basiert, die eine Struktur der mehreren Pakete angeben.

10. Verfahren nach Anspruch 8 oder 9, wobei das Rekonstruieren der mehreren Pakete weiterhin auf ableitbaren Daten basiert.

11. Verfahren nach einem der Ansprüche 8 bis 10, wobei die Signalisierungsdaten Teil der Dienstinformationen oder programmspezifischer Informationen sind, die in einem Transportstrom enthalten sind.

12. Vorrichtung (210), Folgendes umfassend:

Mittel zum Verarbeiten eines Datenstroms, der Signalisierungsdaten umfasst, die mit mehreren Protokollpaketen multiplexiert sind, die einen Protokollmarker umfassen;
Mittel zum Parsing der Signalisierungsdaten aus dem Datenstrom, wobei die Signalisierung statische Daten, ein erstes Datenfeld, das einen Kompressionstyp der Paketköpfe der mehreren Pakete angibt, und ein zweites Datenfeld umfasst, das die mehreren Protokollpakete identifiziert;
Verwenden des Protokollmarkers, um die mehreren Protokollpakete zu identifizieren und dynamische Daten aus den mehreren Protokollpaketen zu extrahieren;
Mittel zum Bestimmen statischer Daten auf der Grundlage der Signalisierungsdaten; und
Mittel zum Rekonstruieren mehrerer Pakete auf der Grundlage der statischen Daten und der dynamischen Daten, wobei die Signalisierungsdaten aus einem logischen Kanal empfangen werden, der verschieden ist von einem Kanal, aus dem die mehreren Protokollpakete empfangen werden.

13. Vorrichtung nach Anspruch 12, wobei das Mittel zum Rekonstruieren der mehreren Pakete auf vorgegebenen Informationen basiert, die eine Struktur der mehreren Pakete angeben.

**14.** Vorrichtung nach Anspruch 12 oder 13, weiterhin Folgendes umfassend:

Mittel zum Veranlassen einer Präsentation einer Dienstführung; und
Mittel zum Empfangen einer Auswahl eines Programms, das den mehreren Protokollpaketen zugeordnet ist.

**15.** Vorrichtung nach einem der Ansprüche 12 bis 14, wobei das Mittel zum Rekonstruieren der mehreren Pakete weiterhin auf ableitbaren Daten basiert.

**Revendications**

**1.** Procédé comprenant :

le traitement d'un flux de données comprenant une pluralité de paquets ;
l'identification (1004) de données statiques et de données dynamiques dans des en-têtes de paquets de la pluralité de paquets ;
la génération (1006) d'une pluralité de paquets de protocole en supprimant les données statiques des en-têtes de paquets, conservant les données dynamiques, et assignant une étiquette de protocole à la pluralité de paquets de protocole ;
la génération (1008) de données de signalisation des données statiques, le premier champ de données indiquant le type de compression des en-têtes de paquets de la pluralité de paquets de protocole et un second champ de données identifiant le flux de données ; et
la transmission des données de signalisation sur un canal logique différent d'un canal sur lequel les paquets de protocole sont transmis, les données de signalisation étant multiplexées avec la pluralité de paquets de protocole.

**2.** Procédé selon la revendication 1, dans lequel un en-tête de chacun de la pluralité de paquets de protocole comprend l'étiquette de protocole, l'étiquette de protocole associant l'en-tête aux données de signalisation.

**3.** Procédé selon la revendication 1 or 2, comprenant en outre :

la détermination que les en-têtes de paquets comprennent chacun un champ présentant des informations dynamiques ; et
la détermination d'une valeur de décalage et d'une valeur delta en fonction des informations dynamiques ; dans lequel les données de signalisation comprennent la valeur de décalage et les données dynamiques comprennent la valeur delta.

**4.** Procédé selon n'importe quelle revendication précédente, dans lequel les données de signalisation font partie d'informations de service ou d'informations spécifiques au programme contenues dans un flux de transport.

**5.** Appareil (103) comprenant :

un moyen de traitement d'un flux de données comprenant une pluralité de paquets ;
un moyen d'identification de données statiques et de données dynamiques dans des en-têtes de paquets de la pluralité de paquets ;
un moyen de génération d'une pluralité de paquets de protocole en supprimant les données statiques des en-têtes de paquets, conservant les données dynamiques, et assignant une étiquette de protocole à la pluralité de paquets de protocole ;
un moyen de génération de données de signalisation des données statiques, un premier champ de données indiquant le type de compression des en-têtes de paquets de la pluralité de paquets de protocole et un second champ de données identifiant le flux de données ; et
un moyen de transmission des données de signalisation sur un canal logique différent d'un canal sur lequel les paquets de protocole sont transmis, les données de signalisation étant multiplexées avec la pluralité de paquets de protocole.

**6.** Appareil selon la revendication 5, dans lequel un en-tête de chacun de la pluralité de paquets de protocole comprend l'étiquette de protocole, l'étiquette de protocole associant l'en-tête aux données de signalisation.

**7.** Appareil selon la revendication 5 ou 6, comprenant en outre :

un moyen de détermination que les en-têtes de paquets comprennent chacun un champ présentant des informations dynamiques ; et
un moyen de détermination d'une valeur de décalage et d'une valeur delta en fonction des informations dynamiques ; dans lequel les données de signalisation comprennent la valeur de décalage et les données dynamiques comprennent la valeur delta.

**8.** Procédé comprenant :

le traitement d'un flux de données qui comprend des données de signalisation multiplexées avec une pluralité de paquets de protocole comprenant une étiquette de protocole ;
l'analyse syntaxique (1204), par un processeur, des données de signalisation du flux de données, la signalisation comprenant des données statiques, un premier champ de données indiquant un type de compression d'entêtes de paquets de la pluralité de paquets, et un second champ de données identifiant la pluralité de paquets de protocole ;
l'utilisation (1206) de l'étiquette de protocole pour identifier la pluralité de paquets de protocole et extraire des données dynamiques de la pluralité de paquets de protocole ;
la détermination de données statiques en fonction des données de signalisation ; et
la reconstruction (1208) d'une pluralité de paquets en fonction des données statiques et des données dynamiques, dans lequel les données de signalisation sont reçues depuis un canal logique différent d'un canal depuis lequel la pluralité de paquets de protocole est reçue.

**9.** Procédé selon la revendication 8, dans lequel la reconstruction de la pluralité de paquets est basée sur des informations prédéterminées indiquant une structure de la pluralité de paquets.

**10.** Procédé selon les revendications 8 ou 9, dans lequel la reconstruction de la pluralité de paquets est basée en outre sur des données inférables.

**11.** Procédé selon l'une quelconque des revendications 8 à 10, dans lequel les données de signalisation font partie d'informations de service ou d'informations spécifiques au programme contenues dans un flux de transport.

**12.** Appareil (210) comprenant :

un moyen de traitement d'un flux de données qui comprend des données de signalisation multiplexées avec une pluralité de paquets de protocole comprenant une étiquette de protocole ;
un moyen d'analyse syntaxique des données de signalisation du flux de données, dans lequel la signalisation comprend des données statiques, un premier champ de données indiquant un type de compression d'en-têtes de paquets de la pluralité de paquets, et un second champ de données identifiant la pluralité de paquets de protocole ;
l'utilisation de l'étiquette de protocole pour identifier la pluralité de paquets de protocole et extraire des données dynamiques de la pluralité de paquets de protocole ;
un moyen de détermination de données statiques en fonction des données de signalisation ; et
un moyen de reconstruction d'une pluralité de paquets en fonction des données statiques et des données dynamiques, dans lequel les données de signalisation sont reçues depuis un canal logique différent d'un canal depuis lequel la pluralité de paquets de protocole est reçue.

**13.** Appareil selon la revendication 12, dans lequel le moyen de reconstruction de la pluralité de paquets est basé sur des informations prédéterminées indiquant une structure de la pluralité de paquets.

**14.** Appareil selon les revendications 12 ou 13, comprenant en outre :

un moyen de présentation d'un guide de service ; et
un moyen de réception d'une sélection d'un programme associé à la pluralité de paquets de protocole.

**15.** Appareil selon l'une quelconque des revendications 12 à 14, dans lequel le moyen de reconstruction de la pluralité de paquets est basé en outre sur des données inférables.

FIG. 1

EP 2 567 524 B1

<u>210</u>

FIG. 2

FIG. 3

400

| Bit Offset | 0-7 | | | 8-15 | 16-23 | 24-31 |
|---|---|---|---|---|---|---|
| 0 | Compression Type 402 | Label Length 404 | O-Flags 406 | Protocol Label 408 | Compression Type dependent header | |
| 32 | Compression Type dependent header (cont.) | | | | | Data |

## FIG. 4A

400

| Bit Offset | 0-7 | | | 8-15 | 16-23 | 24-31 |
|---|---|---|---|---|---|---|
| 0 | Compression Type 402 | Label Length 404 | O-Flags 406 | Protocol Label 408 | | Compression Type dependent header |
| 32 | Compression Type dependent header (cont.) | | | | | |

## FIG. 4B

**FIG. 5A**

| Bit offset | 0-3 | 4-7 | 8-15 | 16-18 | 19-31 |
|---|---|---|---|---|---|
| 0 | Version | Header length | Type of Service | Total Length | |
| 32 | Identification | | | Flags | Fragment Offset |
| 64 | Time to Live | | Protocol | Header Checksum | |
| 96 | Source Address | | | | |
| 128 | Destination Address | | | | |
| 160 | Options (if Header Length > 5) | | | | |
| 160 Or 192+ | Data | | | | |

**FIG. 5B**

| Bit Offset | 0-7 | 8-15 | 16-23 | 24-31 |
|---|---|---|---|---|
| 0 | Compression Type / Label Length / O-Flags | Protocol Label 408 | | Type of Service |
| 32 | Identification (optional) | | Flags (optional) | Fragment Offset (optional) |
| 64 | Header Length (optional) | | Options (if Header Length > 5) | |
| 96 | Options cont. (if Header Length > 5) | IPv4 packet data ... | | |

600

| Octet Offset | 0 | | | | | | | | 1 | | | | | | | | 2 | | | | | | | | 3 | | | | | | | |
|---|---|---|---|---|---|---|---|---|---|---|---|---|---|---|---|---|---|---|---|---|---|---|---|---|---|---|---|---|---|---|---|---|
| Bit Offset | 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 | 0 | 1 |
| 0 | Version | | | | Traffic Class | | | | | | | | Flow Label | | | | | | | | | | | | | | | | | | | |
| 32 | Payload Length | | | | | | | | | | | | | | | | Next Header | | | | | | | | Hope Limit | | | | | | | |
| 64 | Source Address | | | | | | | | | | | | | | | | | | | | | | | | | | | | | | | |
| 96 | | | | | | | | | | | | | | | | | | | | | | | | | | | | | | | | |
| 128 | | | | | | | | | | | | | | | | | | | | | | | | | | | | | | | | |
| 160 | | | | | | | | | | | | | | | | | | | | | | | | | | | | | | | | |
| 192 | Destination Address | | | | | | | | | | | | | | | | | | | | | | | | | | | | | | | |
| 224 | | | | | | | | | | | | | | | | | | | | | | | | | | | | | | | | |
| 256 | | | | | | | | | | | | | | | | | | | | | | | | | | | | | | | | |
| 288 | | | | | | | | | | | | | | | | | | | | | | | | | | | | | | | | |
| 320+ | Data | | | | | | | | | | | | | | | | | | | | | | | | | | | | | | | |

## FIG. 6A

| Bit Offset | 0-7 | | | 8-15 | 16-23 | 24-31 |
|---|---|---|---|---|---|---|
| 0 | Compression Type | Label Length | O-Flags | Protocol Label 408 | | Traffic Class |
| 32 | Next Header (optional) | | | IPv6 packet data ... | | |

## FIG. 6B

EP 2 567 524 B1

| Bit Offset | 0-15 | 16-31 |
|---|---|---|
| 0 | Source Port | Destination Port |
| 32 | Length | Checksum |

FIG. 7A

| Bit Offset | 0-7 | | | 8-15 | 16-23 | 24-31 |
|---|---|---|---|---|---|---|
| 0 | Compression Type | Label Length | O-Flags | Protocol Label 408 | | Type of Service |
| 32 | UDP Checksum | | | Identification (optional) | | Flags (optional) |
| 64 | Fragment Offset (optional) | | | Header Length (optional) | Options (if Header Length > 5) | |
| 96 | Options cont. (if Header Length > 5) | | | | UDP packet data ... | |

FIG. 7B

| Bit Offset | 0-7 | | | 8-15 | 16-23 | 24-31 |
|---|---|---|---|---|---|---|
| 0 | Compression Type | Label Length | O-Flags | Protocol Label 408 | | Traffic Class |
| 32 | UDP Checksum | | | | Next Header (optional) | UDP packet data ... |

FIG. 7C

EP 2 567 524 B1

FIG. 8A

FIG. 8B

FIG. 8C

900

| Bit Offset | 0-7 | | | 8-15 | | | | | | 16-23 | | 24-31 |
|---|---|---|---|---|---|---|---|---|---|---|---|---|
| 0 | Compression Type | Label Length | O-Flags | Protocol Label 408 | | | | | | | | Type of Service |
| 32 | UDP Checksum | | | V | P | X | CC | | M | Payload Type | | Sequence Number |
| 64 | Sequence Number cont. | | | Timestamp | | | | | | | | |
| 96 | Timestamp cont. | | | Identification (optional) | | | | | | | | Flags (optional) |
| 128 | Fragment Offset (optional) | | | Header Length (optional) | | | | Options (if Header Length > 5) | | | | |
| 160 | Options (if Header Length > 5) cont. | | | RTP payload data ... | | | | | | | | |

## FIG. 9A

| Bit Offset | 0-7 | | | 8-15 | | | | | | 16-23 | | 24-31 |
|---|---|---|---|---|---|---|---|---|---|---|---|---|
| 0 | Compression Type | Label Length | O-Flags | Protocol Label 408 | | | | | | | | Traffic Class |
| 32 | UDP Checksum | | | | | V | P | X | CC | | M | Payload Type |
| 64 | Sequence Number | | | Timestamp | | | | | | | | |
| 96 | Timestamp cont. | | | Next Header (optional) | | | | | | | | IPv6 packet data ... |

## FIG. 9B

Receive one or more data flows
1002

Identify static and dynamic data in headers of packets of each data flow
1004

Generate protocol packets by removing static data from the packets while retaining the dynamic data and encapsulating the dynamic data with a protocol header
1006

Generate signaling data based on the static data
1008

Generate a transport stream comprising the signaling data and the protocol packets
1010

Cause transmission of the transport stream to at least one mobile device
1012

FIG. 10

```
┌─────────────────────────────────────────────────────────────────┐
│                     Receive Service Guide                          │
│                            1102                                    │
└─────────────────────────────────────────────────────────────────┘
                                │
                                ▼
┌─────────────────────────────────────────────────────────────────┐
│                   Receive selection of data flow                   │
│                            1104                                    │
└─────────────────────────────────────────────────────────────────┘
                                │
                                ▼
┌─────────────────────────────────────────────────────────────────┐
│      Extract Access Information relative to the data flow of interest│
│                            1106                                    │
└─────────────────────────────────────────────────────────────────┘
                                │
                                ▼
┌─────────────────────────────────────────────────────────────────┐
│      Configure service filtering to receive the data flow of interest│
│                            1108                                    │
└─────────────────────────────────────────────────────────────────┘
                                │
                                ▼
                        ╱───────────╲
              Yes      ╱   Using      ╲    No
        ┌────────────  ╲  MPEG-2 TS?  ╱  ────────────┐
        │              ╲    1110     ╱                │
        ▼               ╲───────────╱                 ▼
```

Using PSI/SI tables (INT table),
- map IP destination address, IP source address, and UDP ports to:
  - PLP ID
  - TS PID
  - Protocol Header, and
- determine static data for the data flow of interest based on the signaling data

1112

Using GSE related signaling,
- map IP destination address, IP source address, and UDP ports to:
  - PLP ID
  - GSE Label
  - Protocol Header
- determine static data for the data flow of interest based on the signaling data

1114

Receive the data flow of interest
1116

Extract dynamic data from the protocol packets by removing a protocol header from each protocol packet
1118

Reconstruct original packets based on the static data extracted from the signaling data and the dynamic data extracted from the protocol packet
1120

## FIG. 11

Receive a transport stream that comprises
signaling data and a plurality of protocol packets
1202

Parse the signaling data from the transport stream
to determine static data for a data flow of interest
1204

Extract dynamic data from the protocol packets by
removing a protocol header from each protocol
packet
1206

Reconstruct original packets based on the static
data and the dynamic data
1208

FIG. 12

Extract Sequence Number SN from RTP
packet header
1302

Extract dynamic part (SN_delta) from SN:
SN_delta=(SN-SN_offset)mod2^SN_bits
1304

SN_delta = 0?
1306

Yes

No

Update SN_offset: SN_offset =
SN_offset + 2^SN_bits
1308

Update Protocol
Label
1310

Insert SN_delta into the protocol packet
header
1312

FIG. 13

```
┌─────────────────────────────────────────────────────────────────────────────┐
│                          Receive transport stream                             │
│                                    1402                                        │
└─────────────────────────────────────────────────────────────────────────────┘
                                      │
                                      ▼
┌─────────────────────────────────────────────────────────────────────────────┐
│  Parse transport stream to obtain a network information table and to identify a transport │
│    stream identifier, an original network identifier, service identifier, and a platform  │
│                        identifier containing data flows                        │
│                                    1404                                        │
└─────────────────────────────────────────────────────────────────────────────┘
                                      │
                                      ▼
┌─────────────────────────────────────────────────────────────────────────────┐
│  Locate a program association table based on the transport stream identifier and the    │
│   original network identifier and parse the program association table to determine a     │
│   program map packet identifier that identifies on which program map table the service   │
│                              identifier is carried                             │
│                                    1406                                        │
└─────────────────────────────────────────────────────────────────────────────┘
                                      │
                                      ▼
┌─────────────────────────────────────────────────────────────────────────────┐
│   Parse program map table to locate an elementary packet identifier associated with a    │
│       data broadcast identifier descriptor containing the platform identifier            │
│                                    1408                                        │
└─────────────────────────────────────────────────────────────────────────────┘
                                      │
                                      ▼
┌─────────────────────────────────────────────────────────────────────────────┐
│   Parse an IP Notification Table (INT) carried on the elementary packet identifier to     │
│  determine a transport stream identifier, an original network identifier, and a component  │
│                                     tag                                        │
│                                    1410                                        │
└─────────────────────────────────────────────────────────────────────────────┘
                                      │
                                      ▼
┌─────────────────────────────────────────────────────────────────────────────┐
│  Locate a Program Association Table (PAT) based on the transport stream identifier and    │
│   the original network identifier and parse the PAT to locate a program map identifier a  │
│      Program Map Table (PMT) associated with the identifying the service identifier       │
│                                    1412                                        │
└─────────────────────────────────────────────────────────────────────────────┘
                                      │
                                      ▼
┌─────────────────────────────────────────────────────────────────────────────┐
│    Parsing the PMT to locate an elementary packet identifier associated with a stream     │
│  identifier descriptor corresponding to the component tag, where the elementary packet    │
│   identifier indicates transport stream packets carrying a multi-protocol encapsulation   │
│               (section) in which the desired IP service is encapsulated                    │
│                                    1414                                        │
└─────────────────────────────────────────────────────────────────────────────┘
```

# FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2134059 A
- US 2002141365 A
- WO 2005015881 A